(19) Europäisches Patentamt
European Patent Office
Office européen des brevets

(11) **EP 3 143 803 B1**

(12) **EUROPEAN PATENT SPECIFICATION**

(45) Date of publication and mention
of the grant of the patent:
**11.07.2018 Bulletin 2018/28**

(21) Application number: **14730608.8**

(22) Date of filing: **16.05.2014**

(51) Int Cl.:
**H04W 52/02** (2009.01)

(86) International application number:
**PCT/SE2014/050604**

(87) International publication number:
**WO 2015/174902 (19.11.2015 Gazette 2015/46)**

(54) **METHODS AND NODES OF A WIRELESS NETWORK FOR DECIDING ON SWITCHING OFF OF A NETWORK NODE**

VERFAHREN UND KNOTEN EINES DRAHTLOSEN NETZWERKS ZUM ENTSCHEIDEN ÜBER DAS ABSCHALTEN EINES NETZKNOTENS

PROCÉDÉS ET NOEUDS D'UN RÉSEAU SANS FIL POUR DÉCIDER DE LA MISE HORS TENSION D'UN NOEUD DE RÉSEAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.03.2017 Bulletin 2017/12**

(73) Proprietor: **Telefonaktiebolaget LM Ericsson (publ)**
**164 83 Stockholm (SE)**

(72) Inventors:
• **KAZMI, Muhammad**
**S-167 39 Bromma (SE)**

• **DIMOU, Konstantinos**
**San Francisco, California 94123-2055 (US)**

(74) Representative: **Ericsson**
**Patent Development**
**Torshamnsgatan 21-23**
**164 80 Stockholm (SE)**

(56) References cited:
**WO-A1-2012/146683      WO-A1-2013/091249
US-A1- 2013 157 642      US-A1- 2014 126 497**

**Description**

**Technical field**

The technology disclosed herein relates generally to the field of wireless networks, and in particular to methods and devices for deciding on switching off of a network node.

**Background**

A wireless network comprising network nodes communicating over a wireless link with communication devices of different types is highly energy consuming. To switch off some such network nodes, e.g. base stations, thus reducing the energy consumption in the wireless network is beneficial from an environmental point of view as well as from a cost perspective. Such action is possible in case there is no traffic or in general no user activity in the coverage area (cell(s)) of these base stations, and the switching off is easier to perform when there is overlapping coverage between different cells: in case one base station is shutting down, one of its neighbor base stations may take over at least some of the active users in the cell. The action of switching off a base station is thus easier to perform within a heterogeneous network (Het net) where typically the coverage area of some low power base stations (i.e. small cells) can be served by the closest macro base station instead. Hence, switching off the operation of relays or base stations corresponding to small cells during given time periods of low, zero, or almost zero user activity in the cell is the most anticipated scenario of such base station switching off mechanism.

Other efforts to reduce the energy consumed by the wireless network have been initiated within 3rd Generation Partnership Project (3GPP): "small cell enhancements", as this item is termed within 3GPP. One proposal in this context is the reduced use of cell specific reference symbols (pilot symbols). The rationale is that users connected to these small cells typically do not move very fast and as such, not so many reference symbols are needed, nor are frequent measurements in these symbols needed.

In a future "Networked society" scenario it is expected that there will be a very large number of machine-type-communication (MTC) devices in wireless networks. Many such MTC devices will transmit small amount of uplink (UL) data (e.g. 100 bits) rather seldom (e.g. once per hour). In Long Term Evolution (LTE) there are plans of introducing a new solution for "enhanced MTC coverage" with a target to improve the link budget with approximately 15-20 dB compared to what is supported with the legacy LTE standard. This is expected to make LTE even more attractive for MTC type of solutions.

In addition, it is desirable that these MTC devices are of low cost and that they consume little energy. Proposed features towards this direction comprise for instance single radio frequency (RF) chain for the MTC devices, narrower operation bandwidth, lower transmission power levels etc. Considering that these MTC devices often are at locations, e.g. underground, where they have to repeat their transmission of a packet a high number of times in order for this packet to be correctly received, it can be imagined that simple procedures such as synchronizing, performing random access, acquiring system information might take several hundreds of milliseconds, or even seconds, which drains the MTC devices on energy. The energy consumption of the MTC device used e.g. as sensors is very critical in that their battery life needs to be very long. For example, the sensors might be located where there is no direct power supply (i.e. they are battery powered) and may further not be accessible after installation (e.g. being installed inside the ceiling of a tunnel) or not easily accessible for renewal or recharging of its battery. The battery life of a sensor may also vary from one sensor to another.

In many scenarios, it is anticipated that this type of MTC devices are going to operate within heterogeneous deployments in which small cells, relay nodes, are deployed very closely to macro base stations. As mentioned earlier, the small cell enhancements such as use of reduced amount of pilot (cell specific reference symbols) transmissions, or energy efficiency mechanisms, such as switching off small base stations when hotspots that these small base stations serve experience low activity, is expected to be implemented in such environments. A network node may at times be serving one or few MTC devices, e.g. sensors, and no or very few user equipment (UEs) (machine type non-sensors or other user operated UEs). In this scenario, wherein the network node for instance serves a single sensor, it is not very efficient from the overall power consumption point of view for the network node to operate. In case these small cells serve MTC devices that need to report any type of measurements or warning, it can be realized that switching off these small cells is not feasible.

The path loss between MTC devices and the base station can be very large in some scenarios, for instance when the MTC device is used as a sensor or metering device located in a remote location such as in the basement of the building. In such scenarios the reception at the MTC device of signals from a base station is very challenging. For example, the path loss can be worse than 20 dB compared to normal operation. In order to cope with such challenges the coverage in uplink and/or in downlink has to be substantially enhanced. This is realized by employing one or plurality of advanced techniques in the MTC device and/or in the radio network node for enhancing the coverage. Some examples of such advanced techniques are transmit power boosting, repetition of transmitted signal, applying additional redundancy to the transmitted signal, use of advanced/enhanced receiver etc. In general when employing such coverage enhancing techniques the MTC device is regarded to be operating in "coverage enhancing mode". However, in some scenarios such as when the coverage (e.g. in terms of path loss) between the MTC device and the base station is within normal level then coverage enhancing techniques are not needed, and the MTC device is regarded to be operating in 'normal coverage mode'. Depending on the path loss between the MTC device and its serving base station, the MTC device and/or base station can be configured to operate in 'coverage enhancing mode' or in 'normal mode'. For example, if path loss is larger than a threshold (e.g. 100 dB) then the coverage enhancing mode can be employed but otherwise the normal coverage mode can be employed. MTC devices in need of coverage enhancement and thus in need of more pilots for channel estimation purposes are not favored within such small cells in which small cell enhancements are to be deployed.

Document US20130157642A1 discloses a method of a base station which includes searching user equipment, having a machine to machine (referred to as M2M) communication function, from user equipment under communication; sending an M2M call setup request to the searched user equipment; sending a handover call setup request to the remaining user equipment from among the user equipment under communication; and entering a power-saving mode. However the document does not address the problem of low energy consumption in the user equipment.

From the above it is realized that there is a conflict between the energy saving functions and the enhanced coverage mode, and there is a need for mechanisms for supporting communication with MTC devices while implementing mechanisms for low energy consumption in the wireless network, e.g. switching off base stations or implementing small cell enhancements.

**Summary**

An object of the present disclosure is to solve or at least alleviate at least one of the above mentioned problems.

The object is according to a first aspect achieved by a method performed in a network node of a wireless network for deciding on switching off of a network node. The wireless network comprises a first network node configured for wireless communication with one or more wireless devices. The method comprises: obtaining an energy increase threshold for each wireless device served by the first network node; determining a respective additional energy consumption Ei required by each wireless device served by the first network node if instead served by a neighboring network node; comparing, for each wireless device served by the first network node, the respective energy increase threshold with the respective additional energy consumption; and deciding, based on the result of the comparing, whether to switch off the first network node.

An advantage of the method is that e.g. machine-to-machine type of traffic, wherein the machine-to-machine type devices typically have energy consumption constraints, is supported while still implementing energy saving mechanisms in the wireless network. Such coexistence is allowed in a much flexible way, and aspects from the network node point of view as well as the wireless device point of view are considered before using the energy saving mechanisms. By means of the method it is ensured that the wireless devices, e.g. machine-to-machine type devices, can keep their energy consumption restrictions, e.g. be operable for a number of years, before taking any energy saving actions within the wireless network that could entail a need of the wireless device, e.g. machine-to-machine type of device, to activate a coverage enhancement mode and thereby increase their energy consumption.

The object is according to a second aspect achieved by a network node of a wireless network capable of deciding on switching off of a network node. The wireless network comprises at least a first network configured for wireless communication with one or more wireless devices. The network node comprises a processor; and a memory storing instructions that, when executed by the processor, causes the network node to: establish an energy increase threshold for each wireless device served by the first network node; determine a respective additional energy consumption required by each wireless device served by the first network node if instead served by a neighboring network node; compare, for each wireless device served by the first network node, the respective energy increase threshold with the respective additional energy consumption; and decide, based on the result of the comparing, whether to switch off the first network node.

The object is according to a third aspect achieved by a computer program for a network node of a wireless network for deciding on switching off of a network node, the wireless network comprising a first network node configured for wireless communication with one or more wireless devices. The computer program comprising computer program code, which, when run on the network node causes the network node to: establish an energy increase threshold for each wireless device served by the first network node; determine a respective additional energy consumption required by each wireless device served by the first network node if instead served by a neighboring network node; compare, for each wireless device served by the first network node, the respective energy increase threshold with the respective additional energy consumption; and decide, based on the result of the comparing, whether to switch off the first network node.

The object is according to a fourth aspect achieved by a computer program product comprising a computer program as above, and a computer readable means on which the computer program is stored.

The object is according to a fifth aspect achieved by a method performed in a wireless device of a wireless network for assisting a network node in deciding on switching off of the network node, wherein the wireless network comprises a first network node configured for wireless communication with the wireless device. The method comprises: obtaining an energy increase threshold for the wireless device served by the first network node; estimating an additional energy consumption required by the wireless device served by the first network node if instead served by a neighboring network node; and transmitting to the first network node a message indicating the additional energy consumption and/or a comparison between the energy increase threshold and the additional energy consumption.

The object is according to a sixth aspect achieved by a wireless device of a wireless network for assisting a network node in deciding on switching off of a network node, wherein the wireless network comprises a first network node configured for wireless communication with the wireless device. The wireless device comprises a processor and a memory storing instructions that, when executed by the processor, causes the wireless device to: establish an energy increase threshold for the wireless device served by the first network node; estimate an additional energy consumption required by the wireless device served by the first network node if instead served by a neighboring network node; and transmit to the first network node a message indicating the additional energy consumption and/or a comparison between the energy increase threshold, and the additional energy consumption.

The object is according to a seventh aspect achieved by a computer program for a wireless device of a wireless network for assisting a network node in deciding on switching off of a network node, wherein the wireless network comprises a first network node configured for wireless communication with the wireless device. The computer program comprises computer program code, which, when run on the wireless device causes the wireless device to: establish an energy increase threshold for the wireless device served by the first network node; estimate an additional energy consumption required by the wireless device served by the first network node if instead served by a neighboring network node; and transmit to the first network node a message indicating the additional energy consumption and/or a comparison between the energy increase threshold and the additional energy consumption.

The object is according to an eight aspect achieved by a computer program product comprising a computer program as above, and a computer readable means on which the computer program is stored.

The object is according to a ninth aspect achieved by a network node comprising first means for obtaining an energy increase threshold for each wireless device served by the first network node. The network node comprises second means for determining a respective additional energy consumption required by each wireless device served by the first network node if instead served by a neighboring network node. The network node comprises third means for comparing, for each wireless device served by the first network node, the respective energy increase threshold with the respective additional energy consumption. The network node comprises fourth means for deciding, based on the result of the comparing, whether to switch off the first network node.

The object is according to a tenth aspect achieved by a wireless device comprising first means for establishing an energy increase threshold for the wireless device served by a first network node. The wireless device comprises second means for estimating an additional energy consumption required by the wireless device served by the first network node if instead served by a neighboring network node. The wireless device comprises third means for transmitting to the first network node a message indicating the additional energy consumption and/or a comparison between the energy increase threshold and the additional energy consumption.

Further features and advantages of the present disclosure will become clear upon reading the following description and the accompanying drawings.

**Brief description of the drawings**

Figure 1 illustrates schematically an environment in which embodiments of the present disclosure may be implemented.

Figure 2 illustrates a flow chart over steps of a method in accordance with an aspect of the present disclosure.

Figure 3 illustrates a flow chart over steps of a method in accordance with an aspect of the present disclosure.

Figure 4 illustrates a flow chart over steps of a method in accordance with an aspect of the present disclosure.

Figure 5 illustrates a flow chart over steps of a method in accordance with an aspect of the present disclosure.

Figure 6 illustrates an example of an RRC message containing energy consumption related parameters.

Figure 7 illustrates a flow chart over steps of a method in accordance with the present disclosure.

Figure 8 illustrates a flow chart over steps of a method in a network node in accordance with an aspect of the present disclosure.

Figure 9 illustrates schematically a network node and means for implementing methods of the present disclosure.

Figure 10 illustrates a network node comprising function modules/software modules for implementing embodiments of the methods of the present disclosure.

Figure 11 illustrates a flow chart over steps of a method in a wireless device in accordance with an aspect of the present disclosure.

Figure 12 illustrates schematically a wireless device and means for implementing methods of the present disclosure.

Figure 13 illustrates wireless device comprising function modules/software modules for implementing embodiments of the methods of the present disclosure.

**Detailed description**

In the following description, for purposes of explanation and not limitation, specific details are set forth such as particular architectures, interfaces, techniques, etc. in order to provide a thorough understanding. In other instances, detailed descriptions of well-known devices, circuits, and methods are omitted so as not to obscure the description with unnecessary detail. Same reference numerals refer to same or similar elements throughout the description.

Briefly, in an aspect of the present disclosure a method in a network node is provided for deciding whether switching off a network node, in particular a radio access node controlling one or more cells, is feasible in terms of battery consumption at the wireless device side. In a particular aspect, the battery consumption of wireless device (e.g. sensors) in need of coverage enhancement mode is considered.

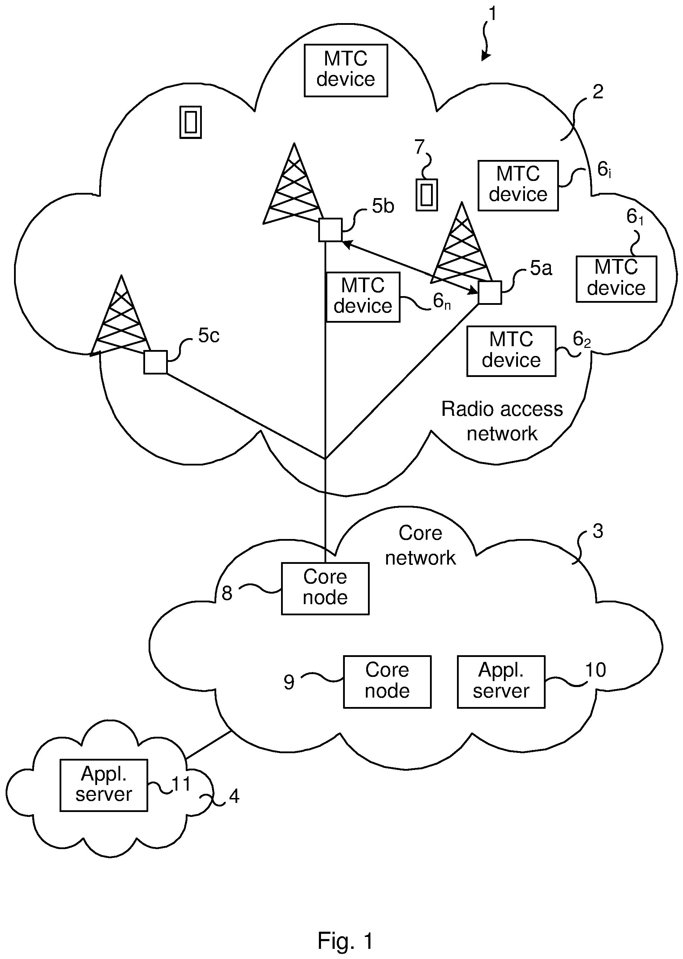

Figure 1 illustrates schematically an environment in which embodiments of the present disclosure may be implemented. A wireless network 1 may comprise a radio access network 2 and a core network 3. The radio access network 2 provides wireless communication for various wireless devices $6_1, 6_2,..., 6_i,..., 6_n$; 7, for example machine type communication devices, MTC devices (also denoted Machine to machine communication device, M2M devices), and communication devices used by users (also denoted user equipment, UE, and in the following also denoted "normal" UE). In the following, M2M devices or MTC devices are simply denoted machine type devices. A machine type device can be distinguished from a "normal" UE in that the former can, without human intervention, communicate with another wireless device, which can be a machine type device or a normal UE. The machine type device can be identified by a network node by capability information indicating that it is machine-to-machine (M2M) capable. The capability information is typically signaled by the machine type device to the network node. The machine-to-machine (M2M) communication (also denoted machine type communication (MTC)) is used for establishing communication between machines and between machines and humans. The communication may comprise of exchange of data, signaling, measurement data, configuration information etc. The device size may vary, e.g. from the size of a wallet to that of a base station. The machine type devices may for instance be used for applications like sensing environmental conditions (e.g. temperature reading), metering or measurement (e.g. electricity usage etc.), fault finding or error detection etc. In these applications the machine type devices are active rather seldom but over a consecutive duration depending upon the type of service, e.g. about 200 ms once every 2 seconds, about 500 ms every 60 minutes etc. The machine type device may perform signal measurements on various frequencies and also be configured to communicate of various Radio Access Technologies (RATs).

The radio access network 2 further comprises radio access nodes 5a, 5b, 5c each controlling one or more geographical areas (also denoted cells) and providing wireless communication for wireless devices $6_1, 6_2,..., 6_i,..., 6_n$; 7 residing within a coverage corresponding to the geographical area(s). Such radio access nodes 5a, 5b, 5c may be denoted in various ways, e.g. base stations, eNB (in case of Long Term Evolution, LTE) etc.

The core network 3 comprises network nodes, in the illustrated case a first core network node 8, and a second core network node 9, comprising for example gateways, mobility management nodes etc. It is noted that the vocabulary for a particular network node, configured to do a certain set of functions, may differ depending on the particular wireless network 1 at hand and technology used therein. The core network node 3 may comprise an application server 10 comprising applications receiving data from the wireless devices $6_1, 6_2,..., 6_i,..., 6_n$, and sending messages to them. The core network 3 may also be connected to an external packet data network 4, which may also comprise such application servers 11. Such external packet data networks, e.g. Internet, may communicate with the wireless devices over the wireless network 1.

In the following figures, a wireless device is denoted WD.

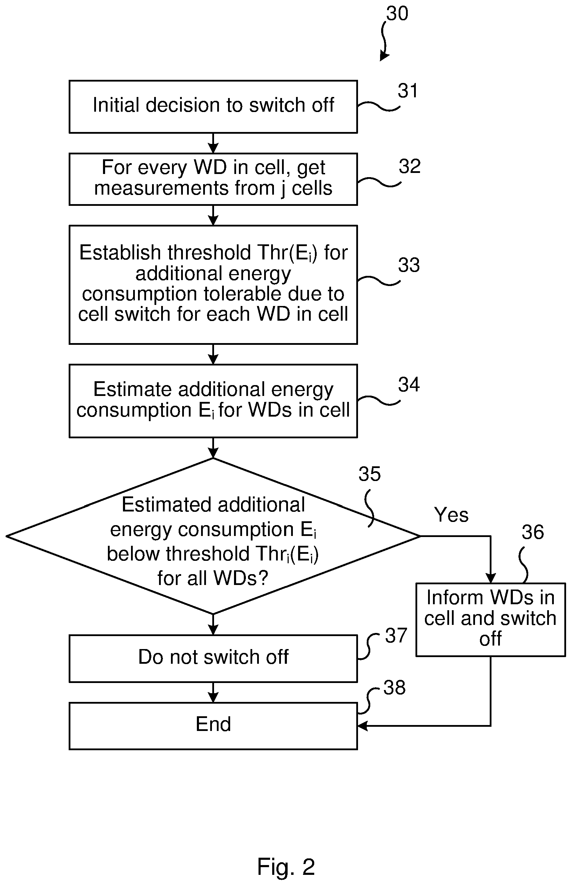

Figure 2 illustrates a flow chart over steps of a method in accordance with an aspect of the present disclosure. In an aspect, a method in the network node, exemplified by a base station in the following, is provided, comprising obtaining at least information related to a tolerable limit of an energy consumption increase of the wireless device, and obtaining measurements towards other base stations and estimating, based on this the extra energy to be consumed by the wireless device in case it is to be connected to another base station and deciding whether to turn off the currently serving base station depending on the estimated increase in the energy consumption. According to the method, it may be decided to turn off the serving base station even if this new connection (to the other base station) implies worse radio link compared to the initial radio link but the energy consumption (including increased consumption) is still within a tolerable or acceptable limit for the wireless device.

The method may involve estimating the extra energy consumed due to the worse radio link in the new connection after the base station is switched off. In addition, the method may involve signaling of the information about the extra energy consumed at the wireless devices to other network nodes, which use the wireless devices for interference coordination, and/or interference mitigation, and/or signaling the information to the wireless devices within the coverage of the base station to be switched off.

Another embodiment discloses a method in network node controlling small cells to activate small cell enhancements such as reduction of reference signals (cell specific pilot signals), for wireless devices (e.g. sensors) operating in coverage enhancement mode.

Referring thus to figure 2, the method 30 may be performed in order to decide whether to switch off any radio network node, e.g. a base station of any size, an access point, a relay node, etc. each in control of one or more cells. For the sake of illustration the case that the network node is a base station in control of one cell is used as an example in the following. It is however noted that the method may be applied for the case that the base station controls several cells. In this case, the method may be used for deciding whether one such cell, and corresponding devices of the base station used for covering this cell (e.g. antennas), is to be switched off, while its remaining cells are still served by the base station. However, as mentioned, in the following the example of one base station serving one cell is used, and for this case the turning off of the base station corresponds to the turning off of its (only) cell.

The method may be performed in a network node of the core network 3 or in a network of the radio access network 2, e.g. the method maybe performed in the base station to possibly be switched off or in e.g. radio controller node instructing the base station to switch off.

A procedure to switch off a network node, for example in order to save energy, may be seen as comprising two phases:

- First phase - initial decision e.g. based on activity

- Second phase - final decision or confirmation phase

At a first step 31, in the first phase, it is tentatively decided to switch off for a certain period of time. This tentative or initial decision or first phase of the decision can be based on network efficiency algorithms. For instance, it maybe determined that the activity in the cell controlled by the base station is low, i.e., there are not that many users in the cell and those present are not active and they can be taken care of by neighbor base stations. One anticipated example of such behavior is the switching off of a small base station (BS), e.g. low power node such as pico BS (also denoted local area BS) or micro BS (also denoted medium range BS) and the remaining users are taken care of by the macro BS (also denoted wide area BS) which is also partly or fully covering the area of the small cell. Other criteria to consider in this initial decision, besides low activity, may for example comprise a sparse distribution of users and a necessity to shut off the base station, e.g. due to it being energized by wind power and there not being sufficient energy to support its operation.

Once the initial decision to switch off the base station is taken, the method 30 proceeds to the second phase. A purpose of the second phase is to ensure that after turning off the current base station, the existing wireless devices served by this current base station can be served by another base station (e.g. neighboring macro base station). After this assurance all the wireless devices are handed over to another base station, and after successful cell change the base station is eventually turned off.

To achieve the object in the second phase, at step 32 information associated with the wireless devices in the cell is gathered. This information is related to at least the energy consumption of the wireless devices. For example, in step 32, measurements for every wireless device residing within the cell of the base station to be switched off is made. Such measurements may comprise signal quality measurements towards j base stations: the serving base station and the j-1 strongest neighboring base stations. Examples of such signal quality measurements comprise received signal strength of pilots. In LTE, for example this is the Reference Symbols Received Power (RSRP) that wireless devices measure from the serving cell and from the j-1 strongest neighbor cells. Another example of such signal quality measurement comprises received quality of pilots. In LTE for example this is the Reference Symbols Received Quality (RSRQ) that these wireless devices measure from the serving cell and from the j-1 strongest neighbor cells.

In the method 30, at least the maximum increase in the energy consumption, an energy increase threshold Thr_Ei, tolerated per wireless device i, is obtained. The change of base station may result in an increase in energy consumption, and in view of the wireless device having to be energy efficient there is a limit to how much more energy it can use while still being operable for a specific period of time (before being replaced entirely or before changing batteries thereof). The threshold Thr_Ei states this tolerable energy consumption increase. It is noted that such energy increase threshold may be obtained based on a total tolerable energy consumption, which in turn can be estimated based e.g. on type of wireless device and the type of energy source thereof.

In step 33, this energy increase threshold Thr_Ei is obtained for each wireless device in the cell of the base station to be switched off. The threshold Thr_Ei can be obtained by using a reference value for the particular type of wireless device at hand, wherein the reference value may be a pre-defined value (obtainable e.g. from a database or from the wireless device), a value corresponding to energy consumption when the wireless device is served by the strongest cell (e.g. in terms of signal strength), a value derived implicitly from pre-defined network configuration e.g. for certain cell coverage or size etc. As mentioned above, the threshold Thr_Ei allows for determination about how much additional energy consumption the wireless device can afford to tolerate in case it has to connect to another serving cell (than the current one), probably having a worse radio link quality than the one with the existing serving cell. The threshold Thr_Ei can be obtained based on information received from the wireless device itself or it can be pre-defined for different types of wireless devices in the manufacturer's specification. In the latter case the information about the acceptable level of increase in the energy consumption can be stored in the memory of the base station (or in another network node) and thus be retrievable for use when needed.

Next, in step 34, additional energy consumption Ei resulting from the handover from the serving base station to another base station is estimated for each wireless device within the cell of the serving base station. This determination may be performed by using the measurements obtained in step 32. For example, it can be determined, based on the signal quality measurements towards base station k, how much more energy the wireless device would need in its communication if it were handed over to this base station k, compared to the energy consumption for communication to the currently serving base station. This determination will be described and exemplified further later.

It is noted that the steps 32, 33, 34 may be performed in another order than the described.

Next, in step 35, it is determined if the estimated additional energy consumption Ei for wireless device i is below its threshold Thr(Ei), which determination is performed for all the wireless devices within the cell of the base station to be switched off. If it is determined that all wireless devices would have an estimated additional energy consumption Ei below their respective threshold Thr(Ei), then flow continues to box 36, wherein the base station is switched off. This switching off may be preceded by signaling informing the wireless devices about the switching off. Other network nodes may also be informed about this switching off. In case the decision is to switch off operation of the base station for a given time duration, then the signaling informing the users in the cell can contain this information in a broadcasting message or in direct signaling about the base station going to switch off for a given time period. The flow then continues to box 38, where the method 30 ends.

If, in box 35, it is determined that one or more wireless devices are estimated to require additional energy consumption Ei above their respective threshold Thr(Ei), then flow continues to box 37 and a decision on not switching off the base station is taken. The flow then continues to box 38, where the method 30 ends.

If the method 30 is performed in another network node than the network node (i.e. base station in this case) to be turned off, then the network node in which the method is performed may send a recommendation to the base station about switching off.

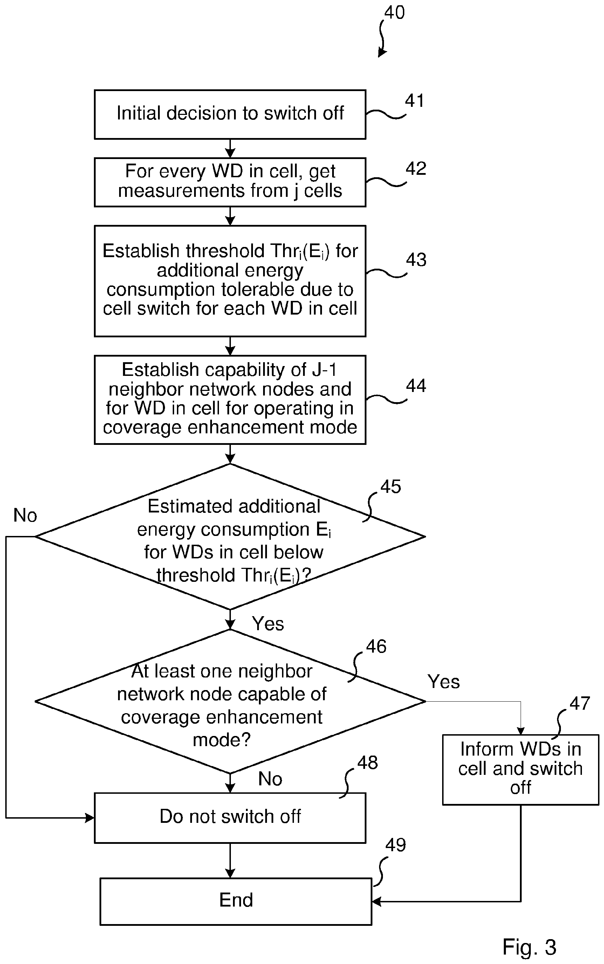

Figure 3 illustrates a flow chart over steps of a method 40 in accordance with an aspect of the present disclosure. Step 41, initial decision to switch off, corresponds to step 31 of method 30, described in relation to figure 2, and will not be described here. Likewise, step 42, wherein measurements for each wireless device is obtained for j cell, corresponds to step 32 of method 30, also described in relation to figure 2, and the description will not be repeated here. Likewise, in step 43, the threshold Thr(Ei) for additional energy consumption tolerable due to base station change is determined for each wireless device in the cell of the base station to possibly be switched off. This step 43 corresponds to step 33 of figure 2 and the description will not be repeated here. Thus, for steps 41, 42, 43, reference is made to the description of steps 31, 32, 33 described in relation to figure 2.

Next, in step 44, a capability of the wireless device is established indicating whether it is capable of operating in enhanced coverage mode or not. This capability information may be obtained from the wireless device directly or based on historical information stored in the base station or from another network node which has such information about the wireless devices' capabilities. The capability information may further comprise additional information, examples of which comprise channels and physical signals on which enhanced coverage mode is possible, whether enhanced coverage mode is possible on uplink (UL), downlink (DL) or on both UL and DL, maximum amount of coverage enhancement (e.g. x dB, such as x = 10 dB) more than a reference value (such as max PL = 100 dB) etc. Such information may for example be useful in case the wireless device might need to operate in coverage enhancement mode in the new serving cell (even if the wireless device does not operate in coverage enhancement mode in the current cell).

In the method 40, step 44, a capability of one or more base stations, which can potentially serve the wireless device after the current serving base station of the wireless devices is turned off, is obtained. The obtained capability indicates whether the neighboring base stations are capable of serving one or more wireless devices in enhanced coverage mode or not. The capability information may also further comprise additional information, examples of which comprise channels and physical signals on which enhanced coverage mode is possible, whether enhanced coverage mode is possible on UL, DL or on both UL and DL, maximum amount of coverage enhancement (e.g. x dB, such as x = 10 dB) more than a reference value (such as max PL = 100 dB), number of wireless devices which can be served in enhanced coverage mode in parallel or simultaneously etc. Such capability may be obtained from another network node (e.g. neighboring cells over X2 interface) or based on historical data or information stored in neighboring base stations. The capability of the neighboring base stations may also be obtained from the wireless devices. For example, wireless devices served by other base stations in the past may maintain the historical data or statistics about the capability of those base stations: whether they support enhanced coverage mode or which have served the wireless device using enhanced coverage mode in the past. Such information can also be stored in the wireless device as part of a self-organizing network (SON) or minimization of drive test (MDT). These features will allow the base station to configure the wireless device to log and store the determined capability related to the enhanced coverage mode of the cells along with additional information such as cell ID (physical cell identity, PCI, or cell global identity, CGI etc.), time of logging, location information etc. The wireless device may then also be requested to report the logged data at certain time e.g. at configurable time, points in time when wireless device sends data, points in time when the wireless device goes to connected/active state etc.

In step 44 thus, dynamic or semi-static information may be obtained about the use of coverage enhancement mode in one or more cells which can potentially serve the wireless device if the current serving base station is turned off. The dynamic information herein refers to the information about the ongoing operation utilizing enhanced coverage mode e.g. number of users served with enhanced coverage mode, channels and physical signals currently used with enhanced coverage mode etc. The network node in which the method 40 is performed may obtain this information from another network node.

It is noted that the steps 42, 43, 44 may be performed in another order than the described.

After obtaining the above information it is used for finally deciding whether or not to turn off the current serving base station.

In step 45, which corresponds to step 35 of method 30 it is determined if the estimated additional energy consumption Ei for wireless device i is below the threshold Thr(Ei), which determination is performed for all the wireless devices within the cell of the base station to be switched off. If it is determined that all wireless devices would have an estimated additional energy consumption Ei below their respective threshold Thr(Ei), then flow continues to step 46.

If, in box 45, it is determined that one or more wireless devices are estimated to require additional energy consumption Ei above their respective threshold Thr(Ei), then flow continues to box 48 and a decision on not switching off the base station is taken. Then, in box 49, the method 40 ends.

If it was determined in step 44 that no wireless device has the capability of operating in coverage enhancement mode, then step 46 can be omitted. Thus, at least one wireless device has the capability of operating in the coverage enhancement mode and needs to be served in this enhanced coverage mode by the new potential serving base station. The decision to turn off the currently serving base station is taken provided that all wireless devices requiring enhanced coverage are also capable of operating in this mode. In step 46, thus, it is determined if at least one neighboring base station is capable of operating in coverage enhancement mode. If yes, then flow continues to step 47, wherein the base station is switched off. This switching off may be preceded with signaling informing the wireless devices about the switching off. Other network nodes may also be informed about this switching off.

If, in step 46 it is determined that no neighboring base station is capable of operating in coverage enhancement mode, then flow continues to box 48 and a decision on not switching off the base station is taken. Then, in box 49, the method 40 ends.

A network node may typically serve a limited number of wireless devices in enhanced coverage mode, therefore the method 40 may optionally comprise the use of the dynamic information (i.e. dynamic or semi-static information that may be obtained about the use of coverage enhancement mode in one or more cells which can potentially serve the wireless device if the current serving base station of the wireless device is turned off, refer to step 44) to determine whether the new potential serving base station can also serve additional wireless devices after handover to it or not. If the new base station can serve all the additional wireless devices also in enhanced coverage mode then it may be decided to turn off the currently serving base station of the wireless device.

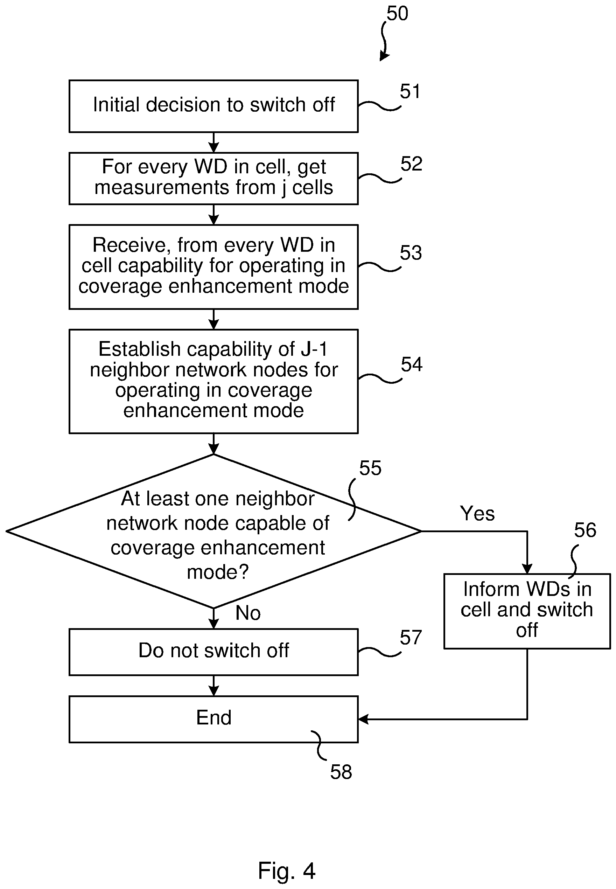

Figure 4 illustrates a flow chart over steps of a method in accordance with an aspect of the present disclosure. In this method 50 it is determined whether the base station can be switched off, based only on the capability to operate in coverage enhancement mode.

In step 51, an initial decision to switch off is taken, based e.g. on low activity in the cell served by the base station or sparse distribution of users therein (compare steps 31 and 41).

Next, in step 52, measurements are made for every wireless device in the cell of the base station to potentially be switched off. Such measurements may comprise signal quality measurements towards j base stations: the serving base station and the j-1 strongest neighboring base stations (compare steps 32 and 42).

In step 53, a capability of the wireless devices indicating whether or not they are capable of operating in enhanced coverage mode is established. This capability information can be obtained from the wireless device directly or based on historical information stored in the base station or obtained from another network node which has this information about the wireless devices' capability. Also compare description of step 44 for additional such information.

In step 54, it is established whether at least one neighboring base station is capable of operating in coverage enhancement mode. If yes, then flow continues to step 56, wherein the base station is switched off. This switching off may be preceded by signaling informing the wireless devices about the switching off. Other network nodes may also be informed about this switching off. The method 50 then ends (box 58). As mentioned earlier, the base station may typically serve a limited number of wireless devices in enhanced coverage mode, therefore also the method 50 (compare method 40) may optionally comprise the use of the dynamic information (i.e. dynamic or semi-static information that may be obtained about the use of coverage enhancement mode in one or more cells which can potentially serve the wireless device if the current serving base station of the wireless device is turned off; refer also to description of step 44) to determine whether the new potential serving base station can also serve additional wireless devices after handover to it or not. If the new base station can serve all the additional wireless devices also in enhanced coverage mode then it may be decided to turn off the currently serving base station.

If, in step 55 it is determined that no neighboring base station is capable of operating in coverage enhancement mode, then flow continues to step 57 and a decision on not switching off the base station is taken. Then, in box 58, the method 50 ends.

It is noted that the methods 30, 40 and 50 have been described for wireless devices, which may comprise UEs or any machine type devices in the cell. However, all these methods may be adapted to be more specific, e.g. to be applied in particular for machine type devices having requirements for low energy consumption, or the methods may be applied only to machine type devices in need of coverage enhancement. Further, the methods 30, 40, 50 are advantageous in particular for machine type devices which are stationary or are moving slowly. Hence, the methods may for example be applied in particular to stationary machine type devices in the cell. It is however noted that the methods may be applied also to other wireless devices, i.e. even devices moving at moderate or higher speed.

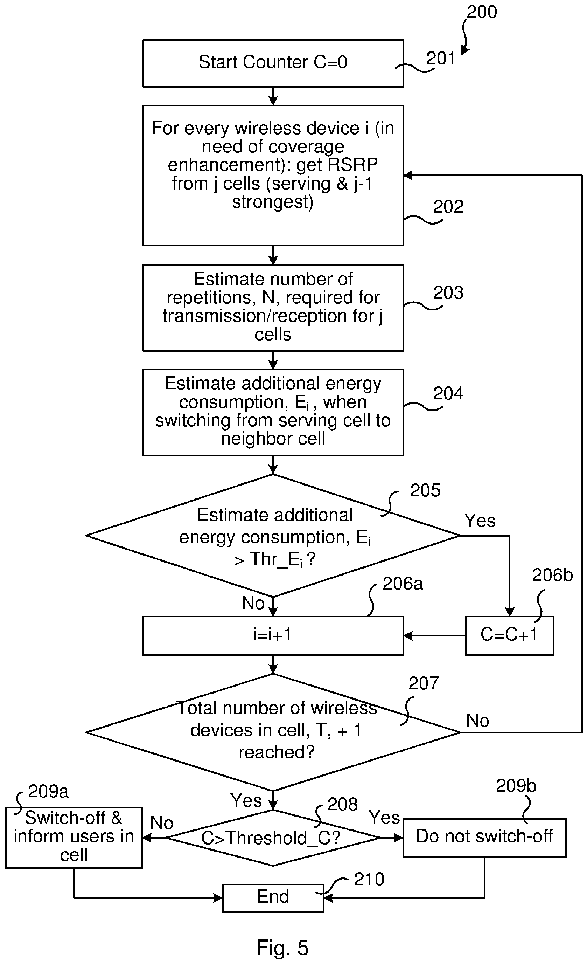

Figure 5 illustrates a flow chart over steps of a method 200 in accordance with an aspect of the present disclosure. In the following it is described how to determine the additional energy consumption of the wireless devices due to change of serving base station. The method 200 can be executed in a network node such as base station, eNode B, relay node, radio network controller, base station controller, access point or any other network node of the wireless network 1.

The method 200 may be performed for determining the additional energy consumption of the wireless device (e.g. extra battery consumption) due to its switch to a base station offering a possibly worse radio link and then determining if the base station may be switched off. For the sake of simplicity and clarity of the explanation, it is assumed in the following description that there is at least one neighbor cell which can accommodate wireless devices in need of coverage enhancement, in case the current base station switches off.

An objective of this embodiment is to determine whether the estimated increase in energy consumption of different wireless devices in the cell allows the switching off of the base station. This switching off determination occurs once the energy consumption increase per wireless device is evaluated and once it is checked if this increase in energy consumption per wireless device is below the maximum (threshold) energy consumption increase of the wireless device. In addition, the determination of switching off the base station is based on the number of wireless devices and/or UEs for which the increase in energy consumption exceeds their allowed energy increase.

Upon start of the method 200, in step 201, a counter is set equal to zero: C = 0. The value of C is the number of wireless devices which would increase their energy/battery consumption to a level higher than the maximum allowed/wished increase in energy consumption. Such increase may, as explained earlier, be due to an eventual cell association of the wireless device to another base station than the currently serving base station, which might involve worse radio link than the one to the currently serving cell.

It is assumed that the base station wishes to tentatively switch off temporarily its operation.

In step 202, for each wireless device (and possibly UE) i, in the cell, measurements from j base stations are obtained: from the serving base station and the j-1 strongest neighboring base stations. The measurements may be done on reference symbols, such as RSRP, RSRQ, received signal strength indication (RSSI). The wireless network 1 typically uses the radio resource control (RRC) message Measurement Control to request measurement reports on reference symbols from UEs in the cell.

An information element could be appended to such existing RRC message Measurement Control containing a request for wireless devices to report their threshold Thr_Ei value. This value could be either an absolute value, e.g. 1 or more Joules or it can be a percentage, e.g. 10 % more energy consumption than what the wireless device would consume if it would have remained in this same cell (i.e. served by the same base station).

It is noted here that step 202 represents only the collection of RSRP, RSRQ, RSSI measurements from wireless devices in the cell. It is then assumed that the threshold for the maximum allowed increase in energy consumption, Thr_Ei, of different wireless devices in the cell is done prior to this instant when the base station wishes to switch off. In this case the information of threshold Thr_Ei may be transmitted by the wireless devices to the network node performing the method 200 via an appositely defined RRC message.

In step 203 the received measurements, e.g. RSRP, from the serving base station and from the neighboring base station by which the wireless device is to be served, in case the serving base station switches off, are used for estimating the extra number of repetitions that would be needed if the wireless device instead communicates with the new base station. In case the wireless device is in need of coverage enhancement, then the number of repetitions needed for uplink signals to be correctly received at the base station and equivalently the number of repetitions of downlink transmissions needed for the wireless device to decode correctly a packet transmitted in downlink is estimated. This estimation is performed for all j strongest cells at step 203. The estimation of number of repetitions required for successful transmission/reception of a packet on the basis of RSPR is explained and exemplified in the following.

It is assumed that a given wireless device is connected to the base station controlled by the node executing the method 200 (which node could be the base station itself). It is further assumed that this wireless device i is in need of coverage enhancement and every time the wireless device needs to transmit a packet of e.g. 800 bits to the base station, the wireless device needs 40 repetitions, i.e. 40 ms so that the packet is correctly received at the base station. This speed corresponds to a data rate of 20 kpbs. The wireless device experiences an UL SINR in the order of -7 dB. Assuming now that the serving base station of the wireless device decides to switch off its operation for a given time period. Then, the wireless device has to be attached to a neighbor base station (e.g. the nearest neighbor base station). Assuming that in case the wireless device connects to the closest macro base station, then, the wireless device experiences an UL SINR of -9 dB.

A mapping of this number of repetitions to the energy consumed is now needed. For this, a mapping table may be used, giving the data rate per experienced UL SINR and then for this experienced SINR the data rate is in the order of 10 kbps for this particular numerical example. This implies then that the wireless device needs 80 ms, hence 80 repetitions of 1 ms are required so as to transmit one packet of 100 bytes. The extra number of repetitions required when the wireless device switches to another base station is estimated to 40. Alternatively, the base station might comprise mappings between received UL SINR and number of repetitions needed for a given packet size. These mappings might have been obtained by extrapolating values from the link of the same wireless device, or they might be generated/measured at other radio links between the base station and other UEs/ wireless devices of the same class/profile as the one in discussion here.

At step 204, the additional/extra energy which will eventually be consumed by the wireless device in case this specific wireless device has to be associated to another base station, in case the current serving base station of the wireless device is switching off its operation for a given period of time. This estimation of extra energy consumption is based on the repetitions needed for successful transmission/reception of a given number of bits and/or on the RSRP values of the current and future serving base station.

Continuing with the same example as above, the extra energy consumption due to the change of base station association can be estimated based on an energy consumption model of the wireless device. As an example, assuming that for every transmission time interval (TTI)l of 1 ms that the wireless device is active it consumes 0.01 Joule, due to transmission, reception and circuits energy consumption. In case of 40 extra ms for every ms of transmission of one packet, this means that 0.4 Joules more are required for the transmission of a single packet in case the wireless device switches e.g. to the closest macro base station. Assuming that a typical AAA alkaline battery has an energy capacity in the order of 5000 Joules, then the extra energy of 0.4 Joules for the transmission of one packet corresponds to 0.008 % of the whole battery energy.

At step 205, it is checked whether the estimated increase in energy consumption of the wireless device due to the base station change to an eventually worse radio link is higher than the threshold for the energy increase, Thr_Ei, tolerated by the wireless device.

In case the estimated energy increase due to cell association change is indeed higher than the threshold energy for this wireless device, then the flow continues to step 206b, wherein the counter C is increased by one.

In case the estimated increase in the energy consumption of the wireless device is not exceeding the threshold of extra energy consumption, then the flow continues to step 206a, wherein the next wireless device i+1 is to be checked.

In step 207 it is checked whether the total number of wireless devices (or wireless devices in need of coverage enhancement, or of normal UEs) in the cell has been checked. If not, then the flow reverts to step 202, and the steps are repeated for the next wireless device.

If, in step 207, all wireless devices in the cell have been checked, then flow continues to step 208, wherein the value of the counter C is checked towards a value of Threshold_C, which may be set by the operator.

In case the value of counter C does not exceed the value of Threshold_C, then flow continues to step 209a, wherein it is decided to switch off the base station for a given period of time t and the wireless devices in the cell may be notified accordingly.

If in step 208, it is determined that there is a higher number of wireless devices than the Threshold_C for which the estimated energy consumption is higher than their respective threshold, then flow continues to step 209b, wherein it is decided not to switch off the base station and normal operation continues.

From boxes 209a and 209b, the flow continues to box 210, wherein the method 200 ends.

As mentioned previously, the value of the threshold Thr_Ei can depend on the wireless device or it can be the same for all wireless devices. The latter could be a simple option and rather straightforward in case the wireless devices which are controlled according to the method 200 are of the same type; e.g. wireless sensors of the same maximum transmission power level and of the same energy consumption model.

The Threshold_C used for counting number of wireless device exceeding their allowed increase in energy consumption can be set either to an absolute value, e.g. 10 wireless devices per cell, or to a percentage, e.g. 10% of the wireless devices. Typical values could range from o up to the total number of wireless devices in the cell.

It is noted that the description and examples here focus on uplink transmission. The conclusions and statements here apply for downlink as well. The same applies for the following part of the description.

As mentioned earlier, an aspect of the present disclosure is the estimation of the increase in energy consumption of the wireless device, i.e. the machine type device or UE, due to worse radio link. This method can be performed either at the wireless device or at the base station.

As also mentioned earlier, the wireless network 1 might have obtained/generated mapping tables between UL SINR and data rates experienced by the different wireless devices. Such mapping tables/graphs can be obtained by measuring the radio links of different wireless devices of the same class, or, by extrapolating results from studies as the ones described in different 3GPP contributions.

It is realized that for different radio links, i.e. for the radio links between the current and the future serving base stations, the SINR per link can be estimated by dividing the RRSP of the link to the sum RSSI - RSRP.

$$ULSINR = \frac{RSRP}{RSSI - RSRP} \tag{1}$$

This is a rough approximation of the SINR in UL, due to the fact that the measurements are done in DL and some reciprocity is assumed. Alternatively, the base stations might perform measurements on uplink pilot symbols so as to get the UL SINR. In this way, the SINR of the serving cell, SINRserving, and the SINR of the new cell, SINRnew are obtained.

Estimating the different data rates, Rserving and Rnew for the different SINR values experienced in the different rates is straightforward, and can be performed e.g. by looking at look-up tables, mapping tables or graphs.

For a given packet size of a given number K of bits, the different rates result into different transmission times, tserving and tnew respectively for the current and next serving cells. An example on that was given in the previous paragraphs.

Once the transmission times are obtained, then, by considering the energy consumption model, which takes into account both the energy required for transmitting as well as the energy required for maintaining the device on are estimated. Typically, the energy consumed is the sum of these two energy values. For a device transmitting with the maximum transmission power level, which is expected to be typically the case when the device is in need of coverage enhancement, for a given data rate the transmission power Ptx, for the same transmission time interval is the same. The same applies for the power needed so as to maintain the device in activity, Pon. The energy consumed is:

$$E = \left(P_{TX} + P_{ON}\right) \bullet t \tag{2}$$

where t is the time period during which the wireless device is active. From equation (2) it is realized that the longer the activity time t the more energy E is consumed.

The above may be implemented in the methods as described, where applicable.

From the above it is realized that, in order for the described methods to be executed e.g. in the network node, the network node needs to get various information. Earlier, it was mentioned that in one example the network node may request this information from the wireless device itself e.g. via RRC signaling. In another alternative the network node may obtain such information based on stored information in the network node e.g. based on pre-defined values for different types of devices, manufacturer's data etc.

In case of first alternative (i.e. obtaining via signaled information), which is elaborated on here, the wireless device can respond by using an RRC message as well. Typically, wireless devices report measurements by using the RRC message Measurement Report. Hence, parameters related to energy consumption could be appended to the UL RRC message Measurement Control (refer e.g. to §5.5.5 of TS 36.331 v11.5.0 (2013-09)).

Alternatively, this information regarding the energy consumption of the wireless device can be appended to the information UE Capabilities. Yet in another alternative this information regarding the energy consumption of the wireless device can be sent by the wireless device in a separate independent message to the network node. The network node requests wireless devices to report their UE capabilities and the wireless devices could report also their energy consumption related parameters to the network node. Hence in this case the energy consumption related parameters could be appended to the UE capability information element (IE). The IEs in discussion here are termed UECapabilityEnquiry and UECapabilityInformation respectively (also refer to pages 161-162 of TS 36.331 v11.5.0 (2013-09)).

For the cases above, the network node could indicate in the existing RRC messages, i.e., Measurement Control and UE Capability Request, a field indicating if these energy consumption parameters need to be included in the response as well.

Another option would be that appositely defined RRC messages are used.

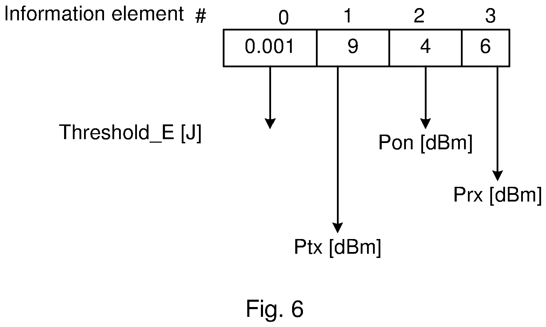

Figure 6 illustrates an example of an RRC message containing energy consumption related parameters. At information element number 0, a maximum (or threshold) allowed increase in energy, Threshold_E, which can be handled by the wireless device in case the network node switches off and the wireless device needs to connect to another network node offering worse radio link (measured in Joule J).

At information element number 1, the amount of transmission power, Ptx consumed at the Tx RF chain when the UE transmits with the maximum transmission power level (measured in dBm).

At information element number 2, the amount of power needed so as to maintain the clocks and the RF circuits on, Pon (measured in dBm).

At information element number 3, the amount of power needed so as to receive or process a certain bit rate (e.g. number N of bps) at the Rx RF chain part (measured in dBm).

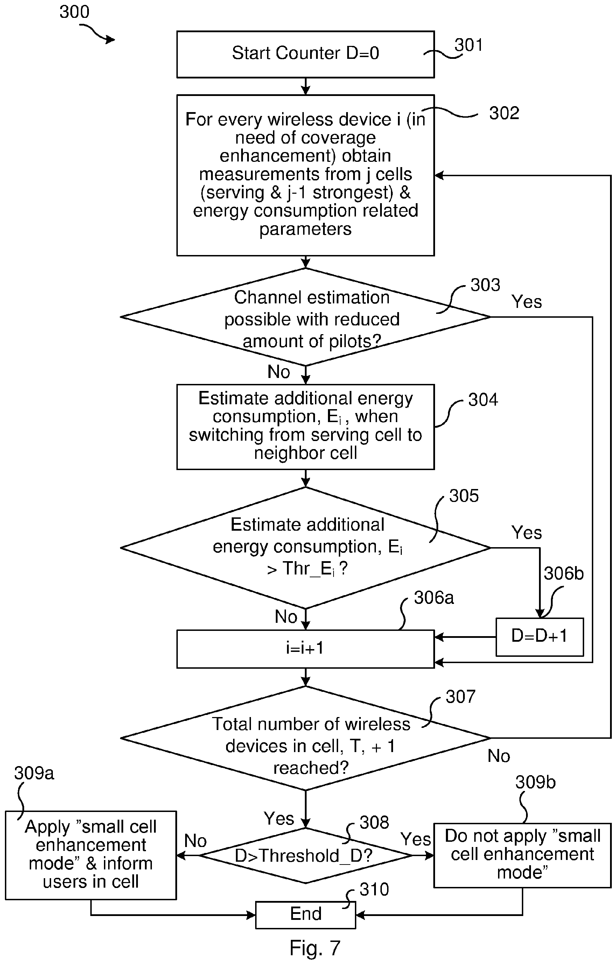

Figure 7 illustrates a flow chart over steps of a method 300 in accordance with the present disclosure. In an aspect of the present disclosure, a method is provided for allowing small cells making use and benefiting from the "small cell enhancement" features while the wireless device is supported in the cell. One of the main features of the "small cells enhancements" scheme is, as mentioned earlier, the transmission of sparse reference symbols (pilot symbols) for channel estimation purposes. However, channel estimation requires enhancements, such as boosting and densification of pilot symbols for wireless devices in need of coverage enhancement. Therefore, in this aspect, specific considerations needed before activating "small cell enhancements" mode within a cell serving wireless devices are addressed.

The method 300 is executed in a network node of the wireless network 1, for instance a small base station or a network node controlling a small base station. The method 300 enables deciding if "small cell enhancement" mode can be activated within a cell. It is again assumed that there is at least one neighbor base station which can accommodate the wireless devices from the current base station in case it is switching off.

At step 301, a number D of wireless devices that are not able to operate within a "small cell enhancement" mode is set equal to 0. It is assumed that the network node, in which the method 300 is performed, is aware that in the cell coverage area of the base station to possibly be switched off there are wireless devices in need of coverage enhancement. Such knowledge may be provided by the wireless device itself, or the base station has detected that communication with certain wireless devices requires coverage enhancement mode features, such as transmission repetitions, etc.

At step 302, measurements are obtained for every wireless device (and UE) in the cell, e.g. measurements on pilot signals from j cells (the serving base station and j-1 strongest neighboring base stations). Further, information on energy consumption related parameters are obtained.

At step 303, it is checked if the channel estimation of the radio link to each of the wireless device is still acceptable with limited number of pilot symbols.

Channel estimation of the radio link can be of acceptable quality, i.e. sufficient, for wireless devices in need of coverage enhancement even if the number of pilots is reduced, e.g. in case the wireless is stationary and this is known at both the base station and the wireless device and radio link statistics have been gathered from previous transmission/reception occasions and channel estimation can be performed with the aid of these previous measurements. In any case, the base station (or other node in the wireless network 1) can with high certainty decide if a given radio link to a wireless device in the cell can operate with fewer number of pilot symbols. As an example, it may be the case that in the past, use of fewer number of pilots for a given radio link has been tested and results have shown that channel estimation was not sufficiently good. A threshold may be set on performance, e.g. in case SINR is not more than N dB (e.g. 2 dB) worse when reduced amount of pilots are used, then the channel estimation can be of acceptable quality.

If the result of step 303 is "no", i.e. in case the wireless device cannot operate acceptably well with a fewer number of pilots, then at step 304, it is determined if the wireless device can be associated to a neighbor cell, without this cell change resulting in an excessive energy consumption at the wireless device. These steps 304, 305 are performed in a similar manner as has been described for the other embodiments, compare e.g. steps 34, 35 described in relation to figure 2 or steps 204, 205 described in relation to figure 5. Hence, at step 304, an additional energy consumption Ei required if the wireless device were to change base station to a neighboring base station is estimated. The estimation may be performed based on the measurements of step 302. At step 305, it is checked whether this estimated additional energy consumption Ei is higher than a threshold Thr_Ei. If yes, i.e. if it is decided that an eventual cell change of the wireless device i would result in an energy consumption higher than an acceptable energy consumption increase threshold Thr_Ei, then the flow continues to step 306b, wherein the number D of users not able to operate in small cell enhancement mode is increased by one. If no, then flow continues to step 306a, at which the next wireless device (wireless device i+i) in the cell is to be checked, in particular, a counter for counting number of checked wireless devices is increased by one. Flow continues to step 307, wherein a check is made as to whether all T wireless devices in the cell already has been checked, i.e. if the number T+1 has been reached. If not, then flow returns to step 301.

Once all of the machined devices in the cell are checked (as determined in step 307), then, at step 308, it is checked if the number of wireless devices not tolerating (in terms of energy consumption) an operation in "small cell enhancement" mode is higher than a threshold Threshold_D. If yes, then at step 309b, it is decided not to proceed to a "small cell enhancement" mode. If no, then at step 309a, "small cell enhancement" mode is applied.

If, at step 303, it is determined that the wireless device can operate with a sufficient channel estimation quality even with smaller number of pilots, then, flow continues to step 306a, at which the next wireless device (wireless device i+i) in the cell is to be checked. That is, the above steps 304 and 305 checking the energy consumption can be omitted.

Before returning to step 301 to repeat the steps for the next wireless device, a check is made in box 307, as to whether all T wireless devices in the cell already has been checked, i.e. if the number T+1 has been reached. If not, then flow returns to step 301. If all wireless devices have been checked, flow continues to step 308, wherein it is checked whether a threshold Threshold_D has been exceeded, i.e. if the number of wireless devices that are unable to operate in a "small cell enhancement" mode is higher than a set threshold value. If yes, flow continues to step 309A, wherein it is decided that "small cell enhancement" mode is not to be applied, after which the method 300 ends (box 310).

If, in step 308, the threshold Threshold_D has not been exceeded, i.e. if only an acceptable number of wireless devices are unable to operate in the small cell enhancement mode, then, at step 309a, a decision to apply small cell enhancement mode is taken. The wireless devices in the cell may be informed accordingly, e.g. by signaling this information to them. The method 300 then ends at box 310.

A cell operating in small cell enhancement mode transmits reduced amount of reference signals. This may affect the performance of the legacy wireless devices i.e. wireless devices which are not capable of operating in the small cell enhancement mode. Therefore the reception signal quality at the legacy wireless devices operating in a small cell enhancement mode may be degraded. This can be avoided by doing handover of such wireless devices to a cell not operating under small cell enhancement mode. Another option is that the network node serving such legacy wireless devices and when operating in small cell enhancement may apply some kind of compensation to the signals received by these legacy wireless devices e.g. increasing the power of reduced reference signals, providing dedicated or wireless device specific reference signals to such wireless devices. Yet another possibility is that the degradation in performance of such legacy wireless devices is considered acceptable up to certain time period during which the cell operates under small cell enhancement mode. All these three approaches are feasible provided the number of wireless devices unable to operate in small cell enhancement mode (e.g. the legacy wireless devices) in a cell is small, e.g. 5-10.

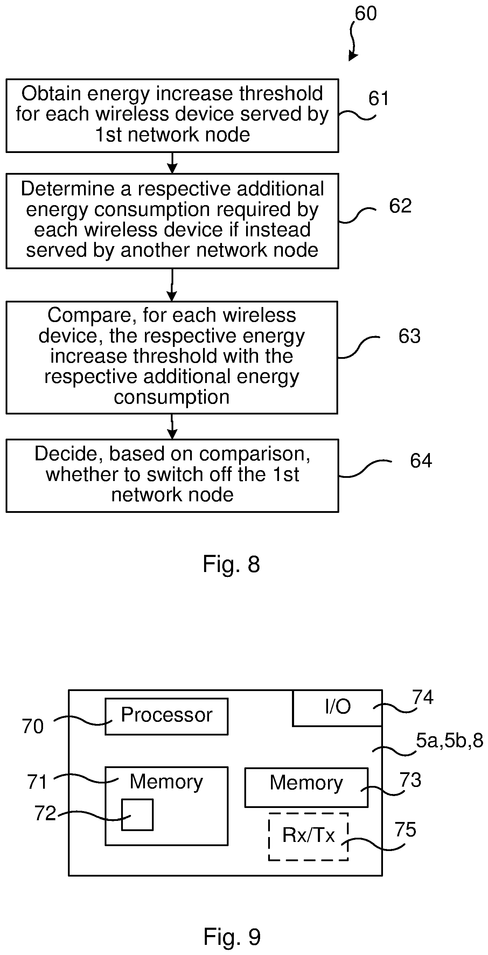

Figure 8 illustrates a flow chart over steps of a method in a network node in accordance with an aspect of the present disclosure. The described features of the methods that have been described can be combined in various ways, examples of which are given in the following. A method 60 is provided, that may be performed in a network node 5a, 5b, 8 of a wireless network 1 (such as the one described with reference to figure 1) for deciding on switching off of a network node 5a, 5b. The wireless network 1 comprises a first network node 5a configured for wireless communication with one or more wireless devices $6_1$,..., $6_i$, ..., $6_n$. The method 60 may thus be performed in the network node 5a, 5b for which the decision is to be made (i.e. whether or not to be switched off), or in a network node 8 controlling it.

The method 60 comprises obtaining 61 an energy increase threshold, Thr_$E_i$, for each wireless device $6_1$,..., $6_i$, ..., $6_n$ served by the first network node 5a. In the method 60, all wireless devices $6_1$,..., $6_i$, ..., $6_n$ that are a machine type communication device are included in the decision process, since they are typically limited by energy consumption requirements to a greater extent than e.g. wireless devices of other types, such as mobile phones which may be recharged on a daily basis.

The method 60 comprises determining 62 a respective additional energy consumption $E_i$ required by each

wireless device $6_1,..., 6_i, ..., 6_n$ served by the first network node 5a if instead served by a neighboring network node 5b, 5c.

The method 60 comprises comparing 63, for each wireless device $6_1,..., 6_i, ..., 6_n$ served by the first network node 5a, the respective energy increase threshold, $Thr\_E_i$, with the respective additional energy consumption $E_i$.

The method 60 comprises deciding 64, based on the result of the comparing 63, whether to switch off the first network node 5a.

In an embodiment, the deciding 64 comprises deciding to switch off the first network node 5a when the comparing 63 reveals that each additional energy consumption $E_i$ is smaller than or equal to each respective energy increase threshold $Thr\_E_i$. If all wireless devices are able to tolerate an energy consumption increase that will most likely result when being handed over to a neighboring network node 5a, 5b, then the first network node 5a may be switched off without this energy saving action being detrimental for the wireless devices.

In an embodiment, the obtaining 61 further comprises establishing for each wireless device $6_1,..., 6_i, ..., 6_n$ the capability thereof to operate in a coverage enhancement mode and obtaining the capability of one or more neighboring network nodes 5b, 5c to operate in a coverage enhancement mode. Such coverage enhancement mode may for example comprise the wireless network being capable of transmission power boosting, repetition of transmitted signal, applying additional redundancy to the transmitted signal, using advanced/enhanced receiver etc.

In a variation of the above embodiment, the deciding 64 further comprises deciding to switch off the first network node 5a when the comparing 63 reveals that each additional energy consumption $E_i$ is smaller than or equal to each respective energy increase threshold $Thr\_E_i$ and when the establishing reveals that each wireless device $6_1,..., 6_i, ..., 6_n$ has the capability to operate in a coverage enhancement mode and at least one neighboring network node 5b, 5c has the capability to operate in the coverage enhancement mode. In this embodiment thus, there are two requirements to be fulfilled: firstly that the wireless device does not consume too much energy when being handed over to another network node and secondly that the wireless device and at least the network node to which it is to be handed over both are able to operate in a mode wherein communication them between can be ensured by using one or more such coverage enhancement features.

In an embodiment, the obtaining 61 comprises receiving the energy increase threshold, $Thr\_E_i$, from each respective wireless device $6_1,..., 6_i, ..., 6_n$ or retrieving the energy increase threshold, $Thr\_E_i$, for each wireless device $6_1,..., 6_i, ..., 6_n$ from a memory or database, or determining the energy increase threshold, $Thr\_E_i$, for each wireless device $6_1,..., 6_i, ..., 6_n$ based on information received from each respective wireless device $6_1,..., 6_i, ..., 6_n$, or receiving the energy increase threshold, $Thr\_E_i$, from another network node of the wireless network 1, or determining the energy increase threshold, $Thr\_E_i$, for each wireless device $6_1,..., 6_i, ..., 6_n$ based on information received from another network node.

In an embodiment, determining 62 a respective additional energy consumption $E_i$ required by each wireless device $6_1,..., 6_i, ..., 6_n$ served by the first network node 5a if instead served by a neighboring network node 5b, 5c comprises receiving from each wireless device $6_1,..., 6_i, ..., 6_n$ a respective additional energy consumption $E_i$, or calculating a respective additional energy consumption $E_i$ required by each wireless device $6_1,..., 6_i, ..., 6_n$ based on information received from each respective wireless device $6_1,..., 6_i, ..., 6_n$. The additional energy consumption $E_i$ may thus be provided in different ways to the network node in which the method is performed.

In an embodiment, determining 62 a respective additional energy consumption $E_i$ required by each wireless device $6_1,..., 6_i, ..., 6_n$ served by the first network node 5a, if instead served by a neighboring network node 5b, 5c, comprises:

- estimating, for each wireless device $6_1,..., 6_i, ..., 6_n$, an increase of the number of repetitions, N, required for transmission and/or reception of signals to/from a neighboring network node 5b, 5c compared to the number of repetitions required for transmission and/or reception of signals to/from the first network node 5a, the estimating being based on signal strength between each neighboring network node 5b, 5c and each respective wireless device $6_1,..., 6_i, ..., 6_n$, and

- determining 62 a respective additional energy consumption $E_i$ required by each wireless device $6_1,..., 6_i, ..., 6_n$ served by the first network node 5a if instead served by a neighboring network node 5b, 5c based on the respective increase of number of repetitions.

The number of repetitions of a transmitted/received signal is, besides being an example of a coverage enhancement action, an example of how to estimate how the energy consumption of the wireless device is affected by a change of network node with which it communicates.

In a variation of the above embodiment, an increase in number of repetitions is translated into additional energy consumption $E_i$ based on time period of one signal transmission or signal reception and corresponding data rate and based on an uplink or downlink signal quality.

In an embodiment, the deciding 64 comprises deciding to switch off the first network node 5a and the method 60 comprises:

- for each wireless device $6_1,..., 6_i, ..., 6_n$ served by the first network node 5a, determining based on the comparing 63 whether each wireless device $6_1,..., 6_i, ..., 6_n$ is able to perform channel estimation with a reduced amount of reference signals, and

- applying a reduced use of reference signals in the neighboring network node 5b, 5c to be serving the wireless devices $6_1,..., 6_i, ..., 6_n$ upon switching off the first network node 5a if the determining reveals that the number of wireless devices $6_1,..., 6_i, ..., 6_n$ that are able to perform channel estimation with a reduced amount of reference signals is higher than a threshold value.

When a decision is made as to switch off the network node 5a at hand, then it is established whether a small cell enhancement, such as the use of reduced amount of reference signals, can be applied in the new cell controlled by the network node 5b, 5c to which the wireless device is handed over, in particular even if a coverage enhancement is also applied.

In an embodiment, the method 60 is initiated upon one or more of the following triggering criteria being fulfilled: an activity level of the first network node 5a being below an activity threshold, an energy source powering the first network node 5a being below an energy threshold, user activity being sparsely distributed within coverage area of the first network node 5a.

In an embodiment, when deciding to switch off the first network node 5a, the method 60 further comprises informing the one or more wireless devices $6_1,..., 6_i, ..., 6_n$ and any other communication devices 7 served by the first network node 5a about the switching off.

In an embodiment, the energy increase threshold, Thr_$E_i$, comprises an additional energy consumption increase tolerable for the respective wireless device $6_1,..., 6_i, ..., 6_n$ while still being operable for a set period of time.

Figure 9 illustrates schematically a network node and means for implementing embodiments of the methods of the present disclosure. The network node 5a, 5b, 8 may comprise a node of the radio access network 2 or a node of the core network 3, described in relation to figure 1. Depending on in which network node 5a, 5b, 8 the method is implemented the network node may comprise different components, devices and circuitry.

The network node 5a, 5b, 8, irrespective of type of node, comprises at least one or more input/output devices 74 for communicating with other network nodes of the wireless network 1. Such input/output device(s) 74 may comprise interfaces such as e.g. in case of LTE, X2 interface for communication between radio access nodes (eNBs) and/or S1 interface for communication between a radio access node and a core network node such as mobility management entity/serving gateway (MME-SG).

The network node 5a, 5b, 8 may further comprise devices and circuitry for receiving/transmitting (Rx/Tx) radio frequency signals, e.g. antennas and related components.

A data memory 73 may also be provided for reading and/or storing data during execution of software instructions in the processor 70. The data memory 73 can be any combination of read and write memory (RAM) and read only memory (ROM).

The network node 5a, 5b, 8 further comprises a processor 70 comprising any combination of one or more of a central processing unit (CPU), multiprocessor, microcontroller, digital signal processor (DSP), application specific integrated circuit etc. capable of executing software instructions stored in a memory 71, which can thus be a computer program product 71. The processor 70 can be configured to execute any of the various embodiments of the method as described for example in relation to figure 8.

In particular, a network node 5a, 5b, 8 of a wireless network 1 is provided capable of deciding on switching off of a network node 5a, 5b, the wireless network 1 comprising at least a first network node 5a configured for wireless communication with one or more wireless devices $6_1,..., 6_i, ..., 6_n$. The network node 5a, 5b, 8 comprises a processor 70, and a memory 71 storing instructions that, when executed by the processor, causes the network node 5a, 5b, 8 to:

- establish an energy increase threshold, Thr_$E_i$, for each wireless device $6_1,..., 6_i, ..., 6_n$ served by the first network node 5a,

- determine a respective additional energy consumption $E_i$ required by each wireless device $6_1,..., 6_i, ..., 6_n$ served by the first network node 5a if instead served by a neighboring network node 5b, 5c,

- compare, for each wireless device $6_1,..., 6_i, ..., 6_n$ served by the first network node 5a, the respective energy increase threshold, Thr_$E_i$, with the respective additional energy consumption $E_i$, and

- decide, based on the result of the comparing 63, whether to switch off the first network node 5a.

In an embodiment, the network node 5a, 5b, 8 is operative to decide to switch off the first network node 5a when the comparing reveals that each additional energy consumption $E_i$ is smaller than or equal to each respective energy increase threshold $Thr\_E_i$.

In an embodiment, the network node 5a, 5b, 8 is operative to obtain by further establishing for each wireless device $6_1, ..., 6_i, ..., 6_n$ the capability thereof to operate in a coverage enhancement mode and obtaining the capability of one or more neighboring network nodes 5b, 5c to operate in a coverage enhancement mode.

In an embodiment, the network node 5a, 5b, 8 is operative to decide by further deciding to switch off the first network node 5a when the comparing 63 reveals that each additional energy consumption $E_i$ is smaller than or equal to each respective energy increase threshold $Thr\_E_i$ and when the establishing reveals that each wireless device $6_1, ..., 6_i, ..., 6_n$ has the capability to operate in a coverage enhancement mode and at least one neighboring network node 5b, 5c has the capability to operate in the coverage enhancement mode.

In an embodiment, the network node 5a, 5b, 8 is operative to decide by receiving the energy increase threshold, $Thr\_E_i$, from each respective wireless device $6_1, ..., 6_i, ..., 6_n$ or retrieving the energy increase threshold, $Thr\_E_i$, for each wireless device $6_1, ..., 6_i, ..., 6_n$ from a memory or database, or determining the energy increase threshold, $Thr\_E_i$, for each wireless device $6_1, ..., 6_i, ..., 6_n$ based on information received from each respective wireless device $6_1, ..., 6_i, ..., 6_n$, or receiving the energy increase threshold, $Thr\_E_i$, from another network node of the wireless network 1, or determining the energy increase threshold, $Thr\_E_i$, for each wireless device $6_1, ..., 6_i, ..., 6_n$ based on information received from another network node.

In an embodiment, the network node 5a, 5b, 8 is operative to determine a respective additional energy consumption $E_i$ required by each wireless device $6_1, ..., 6_i, ..., 6_n$ served by the first network node 5a if instead served by a neighboring network node 5b, 5c by receiving from each wireless device $6_1, ..., 6_i, ..., 6_n$ a respective additional energy consumption $E_i$, or by calculating a respective additional energy consumption $E_i$ required by each wireless device $6_1, ..., 6_i, ..., 6_n$ based on information received from each respective wireless device $6_1, ..., 6_i, ..., 6_n$.

In an embodiment, the network node 5a, 5b, 8 is operative to determine a respective additional energy consumption $E_i$ required by each wireless device $6_1, ..., 6_i, ..., 6_n$ served by the first network node 5a if instead served by a neighboring network node 5b, 5c by:

- estimating, for each wireless device $6_1, ..., 6_i, ..., 6_n$, an increase of the number of repetitions, N, required for transmission and/or reception of signals to/from a neighboring network node 5b, 5c compared to the number of repetitions required for transmission and/or reception of signals to/from the first network node 5a, the estimating being based on signal strength between each neighboring network node 5b, 5c and each respective wireless device $6_1, ..., 6_i, ..., 6_n$, and

- determining a respective additional energy consumption $E_i$ required by each wireless device $6_1, ..., 6_i, ..., 6_n$ served by the first network node 5a if instead served by a neighboring network node 5b, 5c based on the respective increase of number of repetitions.

In an embodiment, the network node 5a, 5b, 8 is operative to translate an increase in number of repetitions into additional energy consumption $E_i$ based on time period of one signal transmission or signal reception and corresponding data rate and based on an uplink or downlink signal quality.

In an embodiment, the network node 5a, 5b, 8 is operative to, when deciding to switch off the first network node 5a:

- for each wireless device $6_1, ..., 6_i, ..., 6_n$ served by the first network node 5a, determine based on the comparing whether each wireless device $6_1, ..., 6_i, ..., 6_n$ is able to perform channel estimation with a reduced amount of reference signals, and

- apply a reduced use of reference signals in the neighboring network node 5b, 5c to be serving the wireless devices $6_1, ..., 6_i, ..., 6_n$ upon switching off the first network node 5a if the determining reveals that the number of wireless devices $6_1, ..., 6_i, ..., 6_n$ that are able to perform channel estimation with a reduced amount of reference signals is higher than a threshold value.

In an embodiment, the network node 5a, 5b, 8 is operative to initiate the decision upon one or more of the following triggering criteria being fulfilled: an activity level of the first network node 5a being below an activity threshold, an energy source powering the first network node 5a being below an energy threshold, user activity being sparsely distributed within coverage area of the first network node 5a.

In an embodiment, the network node 5a, 5b, 8 is operative to, when deciding to switch off the first network node 5a, inform the one or more wireless devices $6_1, ..., 6_i, ..., 6_n$ and any other communication devices 7 served by the first network node 5a about the switching off.

In an embodiment, the energy increase threshold, Thr_$E_i$, comprises an additional energy consumption increase tolerable for the respective wireless device $6_1,..., 6_i, ..., 6_n$ while still being operable for a set period of time.

Still with reference to figure 9, the memory 71 can be any combination of read and write memory (RAM) and read only memory (ROM). The memory 71 also comprises persistent storage, which, for example, can be any single one or combination of magnetic memory, optical memory, solid state memory or even remotely mounted memory.

The present disclosure also encompasses a computer program product 71 comprising a computer program 72 for implementing the methods as described above, and a computer readable means on which the computer program 72 is stored. The computer program product 71 may be any combination of read and write memory (RAM) or read only memory (ROM). The computer program product 71 may also comprise persistent storage, which for example can be any single one or combination of magnetic memory, optical memory or solid state memory.

The present disclosure thus comprise a computer program 72 for a network node 5a, 5b, 8 of a wireless network 1 for deciding on switching off of a network node 5a, 5b, the wireless network 1 comprising a first network node 5a configured for wireless communication with one or more wireless devices $6_1,..., 6_i, ..., 6_n$. The computer program 72 comprises computer program code, which, when run on the network node 5a, 5b, 8 causes the network node 5a, 5b, 8 to:

- establish an energy increase threshold, Thr_$E_i$, for each wireless device $6_1,..., 6_i, ..., 6_n$ served by the first network node 5a,

- determine a respective additional energy consumption $E_i$ required by each wireless device $6_1,..., 6_i, ..., 6_n$ served by the first network node 5a if instead served by a neighboring network node 5b, 5c,

- compare, for each wireless device $6_1,..., 6_i, ..., 6_n$ served by the first network node 5a, the respective energy increase threshold, Thr_$E_i$, with the respective additional energy consumption $E_i$, and

- decide, based on the result of the comparing 63, whether to switch off the first network node 5a.

The computer program product, or the memory, thus comprises instructions executable by the processor. Such instructions may be comprised in a computer program, or in one or more software modules and/or function modules.

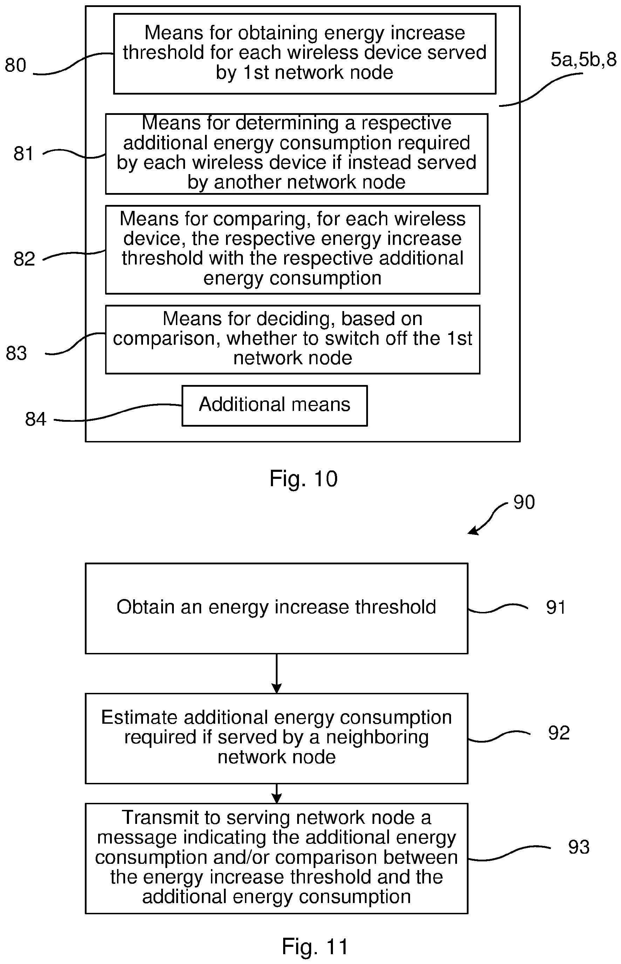

An example of an implementation using function modules/software modules is illustrated in figure 10, in particular illustrating network node 5a, 5b, 8 comprising function modules for implementing methods of the present disclosure. The network node 5a, 5b, 8 is enabled to decide on switching off of a network node 5a, 5b, of a wireless network 1 comprising a first network node 5a configured for wireless communication with one or more wireless devices $6_1,..., 6_i, ..., 6n$. The network node 5a, 5b, 8 comprises first means 80, for example a first function module, for obtaining an energy increase threshold, Thr_$E_i$, for each wireless device $6_1,..., 6_i, ..., 6_n$ served by the first network node 5a. The network node 5a, 5b, 8 comprises second means 81, for example a second function module, for determining a respective additional energy consumption $E_i$ required by each wireless device $6_1,..., 6_i, ..., 6_n$ served by the first network node 5a if instead served by a neighboring network node 5b, 5c. The network node 5a, 5b, 8 comprises third means 82, for example a third function module, for comparing 63, for each wireless device $6_1,..., 6_i, ..., 6_n$ served by the first network node 5a, the respective energy increase threshold, Thr_$E_i$, with the respective additional energy consumption $E_i$. The network node 5a, 5b, 8 comprises fourth means 83, for example a fourth function module, for deciding, based on the result of the comparing, whether to switch off the first network node 5a.

The network node 5a, 5b, 8 may comprise yet additional such means (software/function modules), indicated schematically at reference numeral 84, for performing any of the various steps and features that has been described. As a particular example, such additional means may comprise deciding to switch off the first network node 5a when the comparing 63 reveals that each additional energy consumption $E_i$ is smaller than or equal to each respective energy increase threshold Thr_$E_i$.

The function modules 80, 81, 82, 83 can be implemented using software instructions such as computer program executing in a processor and/or using hardware, such as application specific integrated circuits, field programmable gate arrays, discrete logical components etc.

Figure 11 illustrates a flow chart over steps of a method 90 in a wireless device in accordance with an aspect of the present disclosure. The method 90 is performed in a wireless device $6_i$ of a wireless network 1 for assisting a network node 5a, 5b in deciding on switching off of the network node 5a, 5b, wherein the wireless network 1 comprises a first network node 5a configured for wireless communication with the wireless device $6_i$. The wireless device 6i may be a machine type communication device, MTC device, e.g. a MTC device used for applications like sensing environmental conditions (e.g. temperature reading), metering or measurement (e.g. electricity usage etc.), fault finding or error detection, or an actuator device etc.

The method 90 comprises obtaining 91 an energy increase threshold, Thr_$E_i$, for the wireless device $6_i$ served by the first network node 5a.

The method 90 comprises estimating 92 an additional energy consumption $E_i$ required by the wireless device $6_i$ served by the first network node 5a if instead served by a neighboring network node 5b, 5c.

The method 90 comprises transmitting 93 to the first network node 5a a message indicating the additional energy consumption $E_i$ and/or a comparison between the energy increase threshold, $Thr\_E_i$, and the additional energy consumption $E_i$. The first network node 5a receiving such message from all wireless devices within a cell controlled thereby, can then decide based on the information in the messages whether or not to switch off. The first network node 5a may alternatively forward the messages to another network node, e.g. a core network node, that is capable of (e.g. configured to) making a decision about switching off of the first network node 5a.

In an embodiment, the method 90 further comprises estimating an additional energy consumption $E_i$ required by the wireless device $6_i$ if the wireless device is to operate in a coverage enhancement mode with one or more neighboring network nodes 5b, 5c.

In an embodiment, the method 90 further comprises transmitting to the first network node 5a one or more of: a value representing number of repetitions of a signal needed for a transmission of a given message size on the basis of a received signal strength, a difference of number of repetitions of a signal needed if switching from the first network node 5a to a neighboring network node 5b, 5c on the basis of a received signal strength to the respective neighboring network node 5b, 5c, estimated difference of repetitions of a signal needed for correct transmission and reception of a given message size if switching to a neighboring network node 5b, 5c.

In an embodiment, the wireless device $6_i$ may further transmit an indication that a switch of base station is acceptable by this particular wireless device, i.e. a kind of recommendation. A network node receiving such recommendation may thus easily determine whether it can switch off or not, by counting if the number of wireless devices sending affirming indications for switching off is below an acceptable number.

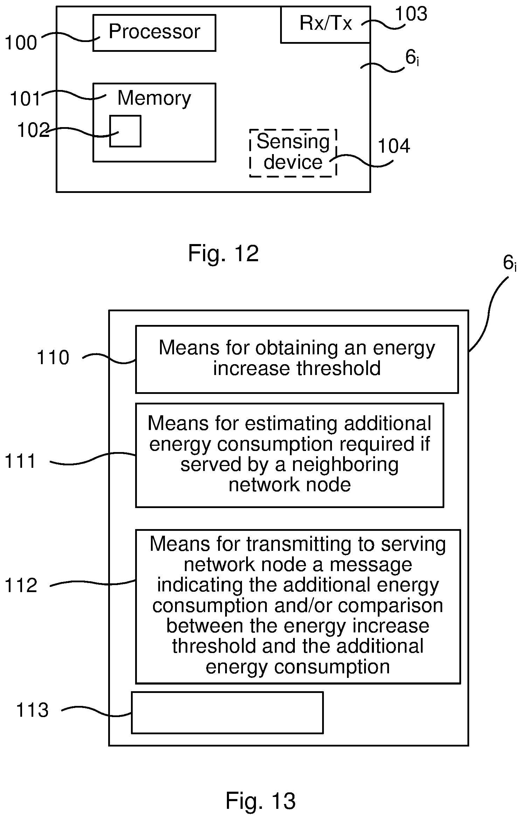

Figure 12 illustrates schematically a wireless device and means for implementing methods of the present disclosure. The wireless device $6_i$ may, depending on type of wireless device that it is, comprise devices such as e.g. a sensing device 104, for example a temperature sensor, a humidity sensor, smoke detector etc.

The wireless device $6_i$ comprises receiving (Rx) and transmitting (Tx) devices, schematically indicated at reference numeral 103, for being able to communicate with a radio access node 5a, 5b, 5c of the wireless network 1. Such Rx/Tx devices may for instance comprise antennas, receiving circuitry, transmitting circuitry etc.

A data memory (not illustrated) may also be provided for reading and/or storing data during execution of software instructions in the processor 100. The data memory can be any combination of read and write memory (RAM) and read only memory (ROM).

The wireless device $6_i$ comprises a processor 100 comprising any combination of one or more of a central processing unit (CPU), multiprocessor, microcontroller, digital signal processor (DSP), application specific integrated circuit etc. capable of executing software instructions stored in a memory 101, which can thus be a computer program product 101. The processor 100 can be configured to execute any of the various embodiments of the method as described e.g. in relation to figure 11. 30.

In particular, a wireless device $6_i$ of a wireless network 1 is provided for assisting a network node 5a, 5b, 8 in deciding on switching off of a network node 5a, 5b, wherein the wireless network 1 comprises a first network node 5a configured for wireless communication with the wireless device $6_i$. The wireless device $6_i$ comprises a processor 100 and a memory 101 storing instructions that, when executed by the processor, causes the wireless device $6_i$ to:

- establish an energy increase threshold, $Thr\_E_i$, for the wireless device $6_i$ served by the first network node 5a,

- estimate an additional energy consumption $E_i$ required by the wireless device $6_i$ served by the first network node 5a if instead served by a neighboring network node 5b, 5c, and

- transmit to the first network node 5a a message indicating the additional energy consumption $E_i$ and/or a comparison between the energy increase threshold, $Thr\_E_i$, and the additional energy consumption $E_i$.

In an embodiment, the wireless device $6_i$ is operative to estimate an additional energy consumption Ei required by the wireless device 6i if the wireless device is to operate in a coverage enhancement mode with one or more neighboring network nodes 5b, 5c.

In an embodiment, the wireless device 6i is operative to transmit to the first network node 5a one or more of: a value representing number of repetitions of a signal needed for a transmission of a given message size on the basis of a received signal strength, a difference of number of repetitions of a signal needed if switching from the first network node 5a to a neighboring network node 5b, 5c on the basis of a received signal strength to the respective neighboring network node 5b, 5c, estimated difference of repetitions of a signal needed for correct transmission and reception of a given message size if switching to a neighboring network node 5b, 5c.

Still with reference to figure 12, the memory 101 can be any combination of read and write memory (RAM) and read only memory (ROM). The memory 101 also comprises persistent storage, which, for example, can be any single one or combination of magnetic memory, optical memory, solid state memory or even remotely mounted memory.

The present disclosure also encompasses a computer program product 101 comprising a computer program 102 for implementing the methods as described above, and a computer readable means on which the computer program 102 is stored. The computer program product 33 may be any combination of read and write memory (RAM) or read only memory (ROM). The computer program product 33 may also comprise persistent storage, which for example can be any single one of or combination of magnetic memory, optical memory or solid state memory.

The present disclosure thus comprises a computer program 33. A computer program 102 for a wireless device $6_i$ of a wireless network 1 for assisting a network node 5a, 5b, 8 in deciding on switching off of a network node 5a, 5b, wherein the wireless network 1 comprises a first network node 5a configured for wireless communication with the wireless device $6_i$. The computer program 102 comprises computer program code, which, when run on the wireless device $6_i$ causes the wireless device $6_i$ to:

- establish an energy increase threshold, Thr_$E_i$, for the wireless device $6_i$ served by the first network node 5a,

- estimate an additional energy consumption $E_i$ required by the wireless device 6i served by the first network node 5a if instead served by a neighboring network node 5b, 5c, and

- transmit to the first network node 5a a message indicating the additional energy consumption $E_i$ and/or a comparison between the energy increase threshold, Thr_$E_i$, and the additional energy consumption $E_i$.

The computer program product, or the memory, thus comprises instructions executable by the processor. Such instructions may be comprised in a computer program, or in one or more software modules or function modules.

An example of an implementation using function modules/software modules is illustrated in figure 13, in particular illustrating a wireless device 6i comprising function modules for implementing embodiments of the methods of the present disclosure. The wireless device $6_i$ comprises first means 110, for example a first function module, for establishing an energy increase threshold, Thr_$E_i$, for the wireless device $6_i$ served by a first network node 5a. The wireless device 6i comprises second means 111, for example a second function module, for estimating an additional energy consumption $E_i$ required by the wireless device $6_i$ served by the first network node 5a if instead served by a neighboring network node 5b, 5c. The wireless device $6_i$ comprises third means 112, for example a third function module, for transmitting to the first network node 5a a message indicating the additional energy consumption $E_i$ and/or a comparison between the energy increase threshold, Thr_$E_i$, and the additional energy consumption $E_i$.

The wireless device $6_i$ may comprise yet additional such means (software/function modules), indicated schematically at reference numeral 113, for performing any of the various steps and features that has been described.

The function modules 110, 111, 112, 113 can be implemented using software instructions such as computer program executing in a processor and/or using hardware, such as application specific integrated circuits, field programmable gate arrays, discrete logical components etc.

The invention has mainly been described herein with reference to a few embodiments. However, as is appreciated by a person skilled in the art, other embodiments than the particular ones disclosed herein are equally possible within the scope of the invention, as defined by the appended patent claims.

**Claims**

1. A method (60) performed in a network node (5a, 5b, 8) of a wireless network (1) for deciding on switching off of a network node (5a, 5b), the wireless network (1) comprising a first network node (5a) configured for wireless communication with one or more wireless devices ($6_1$,..., $6_i$, ..., $6_n$), the method (60) comprising:

- obtaining (61) an energy increase threshold, Thr_$E_i$, for each wireless device ($6_1$,..., $6_i$, ..., $6_n$) served by the first network node (5a),
- determining (62) a respective additional energy consumption $E_i$ required by each wireless device ($6_1$,..., $6_i$, ..., $6_n$) served by the first network node (5a) if instead served by a neighboring network node (5b, 5c),
- comparing (63), for each wireless device ($6_1$,..., $6_i$, ..., $6_n$) served by the first network node (5a), the respective energy increase threshold, Thr_$E_i$, with the respective additional energy consumption $E_i$, and
- deciding (64), based on the result of the comparing (63), whether to switch off the first network node (5a), and if affirmative,
- switching off the first network node (5a).

2. A network node (5a, 5b, 8) of a wireless network (1) capable of deciding on switching off of a network node (5a, 5b), the wireless network (1) comprising at least a first network node (5a) configured for wireless communication with one or more wireless devices ($6_1$,..., $6_i$, ..., $6_n$), the network node (5a, 5b, 8) comprising:

   a processor (70); and
   a memory (71) storing instructions that, when executed by the processor, causes the network node (5a, 5b, 8) to:

   - establish an energy increase threshold, $Thr\_E_i$, for each wireless device ($6_1$,..., $6_i$, ..., $6_n$) served by the first network node (5a),
   - determine a respective additional energy consumption $E_i$ required by each wireless device ($6_1$,..., $6_i$, ..., $6_n$) served by the first network node (5a) if instead served by a neighboring network node (5b, 5c),
   - compare, for each wireless device ($6_1$,..., $6_i$, ..., $6_n$) served by the first network node (5a), the respective energy increase threshold, $Thr\_E_i$, with the respective additional energy consumption $E_i$, and
   - decide, based on the result of the comparing (63), whether to switch off the first network node (5a), and if affirmative
   - switch off the first network node (5a).

3. The network node (5a, 5b, 8) as claimed in claim 2, operative to decide by deciding to switch off the first network node (5a) when the comparing reveals that each additional energy consumption $E_i$ is smaller than or equal to each respective energy increase threshold $Thr\_E_i$.

4. The network node (5a, 5b, 8) as claimed in claim 2 or 3, operative to obtain by further establishing for each wireless device ($6_1$,..., $6_i$, ..., $6_n$) the capability thereof to operate in a coverage enhancement mode and obtaining the capability of one or more neighboring network nodes (5b, 5c) to operate in a coverage enhancement mode, and operative to decide by further deciding to switch off the first network node (5a) when the comparing (63) reveals that each additional energy consumption $E_i$ is smaller than or equal to each respective energy increase threshold $Thr\_E_i$ and when the establishing reveals that each wireless device ($6_1$,..., $6_i$, ..., $6_n$) has the capability to operate in a coverage enhancement mode and at least one neighboring network node (5b, 5c) has the capability to operate in the coverage enhancement mode.

5. The network node (5a, 5b, 8) as claimed in any of claims 2-4, operative to decide by receiving the energy increase threshold, $Thr\_E_i$, from each respective wireless device ($6_1$,..., $6_i$, ..., $6_n$) or retrieving the energy increase threshold, $Thr\_E_i$, for each wireless device ($6_1$,..., $6_i$, ..., $6_n$) from a memory or database, or determining the energy increase threshold, $Thr\_E_i$, for each wireless device ($6_1$,..., $6_i$, ..., $6_n$) based on information received from each respective wireless device ($6_1$,..., $6_i$, ..., $6_n$), or receiving the energy increase threshold, $Thr\_E_i$, from another network node of the wireless network (1), or determining the energy increase threshold, $Thr\_E_i$, for each wireless device ($6_1$,..., $6_i$, ..., $6_n$) based on information received from another network node.

6. The network node (5a, 5b, 8) as claimed in any of claims 2-5, operative to determine a respective additional energy consumption $E_i$ required by each wireless device ($6_1$,..., $6_i$, ..., $6_n$) served by the first network node (5a) if instead served by a neighboring network node (5b, 5c) by receiving from each wireless device ($6_1$,..., $6_i$, ..., $6_n$) a respective additional energy consumption $E_i$, or by calculating a respective additional energy consumption $E_i$ required by each wireless device ($6_1$,..., $6_i$, ..., $6_n$) based on information received from each respective wireless device ($6_1$,..., $6_i$, ..., $6_n$).

7. The network node (5a, 5b, 8) as claimed in any of claims 2-6, operative to determine a respective additional energy consumption $E_i$ required by each wireless device ($6_1$,..., $6_i$, ..., $6_n$) served by the first network node (5a) if instead served by a neighboring network node (5b, 5c) by:

   - estimating, for each wireless device ($6_1$,..., $6_i$, ..., $6_n$), an increase of the number of repetitions, N, required for transmission and/or reception of signals to/from a neighboring network node (5b, 5c) compared to the number of repetitions required for transmission and/or reception of signals to/from the first network node (5a), the estimating being based on signal strength between each neighboring network node (5b, 5c) and each respective wireless device ($6_1$,..., $6_i$, ..., $6_n$), and
   - determining a respective additional energy consumption $E_i$ required by each wireless device ($6_1$,..., $6_i$, ..., $6_n$) served by the first network node (5a) if instead served by a neighboring network node (5b, 5c) based on the respective increase of number of repetitions.

8. The network node (5a, 5b, 8) as claimed in claim 7, operative to translate an increase in number of repetitions into additional energy consumption Ei based on time period of one signal transmission or signal reception and corresponding data rate and based on an uplink or downlink signal quality.

9. The network node (5a, 5b, 8) as claimed in any of claims 2-8, operative to, when deciding to switch off the first network node (5a):

   - for each wireless device ($6_1$,..., $6_i$, ..., $6_n$) served by the first network node (5a), determine based on the comparing whether each wireless device ($6_1$,..., $6_i$, ..., $6_n$) is able to perform channel estimation with a reduced amount of reference signals, and
   - apply a reduced use of reference signals in the neighboring network node (5b, 5c) to be serving the wireless devices ($6_1$,..., $6_i$, ..., $6_n$) upon switching off the first network node (5a) if the determining reveals that the number of wireless devices ($6_1$,..., $6_i$, ..., $6_n$) that are able to perform channel estimation with a reduced amount of reference signals is higher than a threshold value.

10. The network node (5a, 5b, 8) as claimed in any of claims 2-9, operative to initiate the decision upon one or more of the following triggering criteria being fulfilled: an activity level of the first network node (5a) being below an activity threshold, an energy source powering the first network node (5a) being below an energy threshold, user activity being sparsely distributed within coverage area of the first network node (5a).

11. The network node (5a, 5b, 8) as claimed in any of claims 2-10, operative to, when deciding to switch off the first network node (5a), inform the one or more wireless devices ($6_1$,..., $6_i$, ..., $6_n$) and any other communication devices (7) served by the first network node (5a) about the switching off.

12. The network node (5a, 5b, 8) as claimed in any of claims 2-11, wherein the energy increase threshold, $Thr\_E_i$, comprises an additional energy consumption increase tolerable for the respective wireless device ($6_1$,..., $6_i$, ..., $6_n$) while still being operable for a set period of time.

13. A method (90) performed in a wireless device ($6_i$) of a wireless network (1) for assisting a network node (5a, 5b) in deciding on switching off of the network node (5a, 5b), wherein the wireless network (1) comprises a first network node (5a) configured for wireless communication with the wireless device ($6_i$), the method (90) comprising:

   - obtaining (91) an energy increase threshold, $Thr\_E_i$, for the wireless device ($6_i$) served by the first network node (5a),
   - estimating (92) an additional energy consumption $E_i$ required by the wireless device ($6_i$) served by the first network node (5a) if instead served by a neighboring network node (5b, 5c), and
   - transmitting (93) to the first network node (5a) a message indicating the additional energy consumption $E_i$ and/or a comparison between the energy increase threshold, $Thr\_E_i$, and the additional energy consumption $E_i$.

14. A wireless device ($6_i$) of a wireless network (1) for assisting a network node (5a, 5b, 8) in deciding on switching off of a network node (5a, 5b), wherein the wireless network (1) comprises a first network node (5a) configured for wireless communication with the wireless device ($6_i$), the wireless device ($6_i$) comprising:

   a processor (100); and
   a memory (101) storing instructions that, when executed by the processor, causes the wireless device ($6_i$) to:

      - establish an energy increase threshold, $Thr\_E_i$, for the wireless device ($6_i$) served by the first network node (5a),
      - estimate an additional energy consumption $E_i$ required by the wireless device ($6_i$) served by the first network node (5a) if instead served by a neighboring network node (5b, 5c), and
      - transmit to the first network node (5a) a message indicating the additional energy consumption $E_i$ and/or a comparison between the energy increase threshold, $Thr\_E_i$, and the additional energy consumption $E_i$.

15. The wireless device ($6_i$) as claimed in claim 14, operative to estimate an additional energy consumption $E_i$ required by the wireless device ($6_i$) if the wireless device is to operate in a coverage enhancement mode with one or more neighboring network nodes (5b, 5c).

**EP 3 143 803 B1**

**Patentansprüche**

1. Verfahren (60), das in einem Netzwerkknoten (5a, 5b, 8) eines drahtlosen Netzwerks (1) zum Entscheiden über das Abschalten eines Netzwerkknotens (5a, 5b) ausgeführt wird, wobei das drahtlose Netzwerk (1) einen ersten Netzwerkknoten (5a) umfasst, der zur drahtlosen Kommunikation mit einer oder mehreren drahtlosen Vorrichtungen ($6_1$, ..., $6_i$, ..., $6_n$) konfiguriert ist, wobei das Verfahren (60) Folgendes umfasst:

   - Erhalten (61) eines Energieerhöhungsschwellenwertes $Thr\_E_i$ für jede drahtlose Vorrichtung ($6_1$, ..., $6_i$, ..., $6_n$), die von dem ersten Netzwerkknoten (5a) bedient wird,
   - Bestimmen (62) eines jeweiligen zusätzlichen Energieverbrauchs $E_i$, der von jeder drahtlose Vorrichtung ($6_1$, ..., $6_i$, ..., $6_n$) benötigt wird, die von dem ersten Netzwerkknoten (5a) bedient wird, wenn sie stattdessen von einem benachbarten Netzwerkknoten (5b, 5c) bedient wird,
   - Vergleichen (63) für jede drahtlose Vorrichtung ($6_1$, ..., $6_i$, ..., $6_n$), die von dem ersten Netzwerkknoten (5a) bedient wird, des jeweiligen Energieanstiegsschwellenwertes $Thr\_E_i$ mit dem jeweiligen zusätzlichen Energieverbrauch Ei und
   - Entscheiden (64), basierend auf dem Ergebnis des Vergleichs (63), ob der erste Netzwerkknoten (5a) abgeschaltet werden soll, und falls ja,
   - Abschalten des ersten Netzwerkknotens (5a).

2. Netzwerkknoten (5a, 5b, 8) eines drahtlosen Netzwerks (1), der über das Abschalten eines Netzwerkknotens (5a, 5b) entscheiden kann, wobei das drahtlose Netzwerk (1) mindestens einen ersten Netzwerkknoten (5a) umfasst, der zur drahtlosen Kommunikation mit einer oder mehreren drahtlosen Vorrichtungen ($6_1$, ..., $6_i$, ..., $6_n$) konfiguriert ist, wobei der Netzwerkknoten (5a, 5b, 8) Folgendes umfasst:

   einen Prozessor (70); und
   einen Speicher (71), der Anweisungen speichert, die, wenn sie von dem Prozessor ausgeführt werden, den Netzwerkknoten (5a, 5b, 8) zu Folgendem veranlassen:

   - Ermitteln eines Energieerhöhungsschwellenwertes $Thr\_E_i$ für jede drahtlose Vorrichtung ($6_1$, ..., $6_i$, ..., $6_n$), die von dem ersten Netzwerkknoten (5a) bedient wird,
   - Bestimmen eines jeweiligen zusätzlichen Energieverbrauchs $E_i$, der von jeder drahtlosen Vorrichtung ($6_1$, ..., $6_i$, ..., $6_n$) benötigt wird, die von dem ersten Netzwerkknoten (5a) bedient wird, wenn sie stattdessen von einem benachbarten Netzwerkknoten (5b, 5c) bedient wird,
   - Vergleichen für jede drahtlose Vorrichtung ($6_1$, ..., $6_i$, ..., $6_n$), die von dem ersten Netzwerkknoten (5a) bedient wird, des jeweiligen Energieerhöhungsschwellenwertes $Thr\_E_i$ mit dem jeweiligen zusätzlichen Energieverbrauch $E_i$ und
   - Entscheiden, basierend auf dem Ergebnis des Vergleichs (63), ob der erste Netzwerkknoten (5a) abgeschaltet werden soll, und falls ja,
   - Abschalten des ersten Netzwerkknotens (5a).

3. Netzwerkknoten (5a, 5b, 8) nach Anspruch 2, der dafür ausgelegt ist, zu entscheiden, indem entschieden wird, den ersten Netzwerkknoten (5a) auszuschalten, wenn der Vergleich ergibt, dass jeder zusätzliche Energieverbrauch $E_i$ kleiner oder gleich dem jeweiligen Energieerhöhungsschwellenwert $Thr\_E_i$ ist.

4. Netzwerkknoten (5a, 5b, 8) nach Anspruch 2 oder 3, der dafür ausgelegt ist, durch weitere Feststellungen für jede drahtlose Vorrichtung ($6_1$, ..., $6_i$, ..., $6_n$) die Fähigkeit davon zu erhalten, in einem Abdeckungsverbesserungsmodus zu arbeiten, und die Fähigkeit eines oder mehrerer benachbarter Netzwerkknoten (5b, 5c) zu erhalten, in einem Abdeckungsverbesserungsmodus zu arbeiten, und der dafür ausgelegt ist, zu entscheiden, indem entschieden wird, den ersten Netzwerkknoten abzuschalten (5a), wenn der Vergleich (63) ergibt, dass jeder zusätzliche Energieverbrauch $E_i$ kleiner oder gleich dem jeweiligen Energieerhöhungsschwellenwert $Thr\_E_i$ ist, und wenn die Feststellung ergibt, dass jede drahtlose Vorrichtung ($6_1$, ..., $6_i$, ..., $6_n$) die Fähigkeit hat, in einem Abdeckungsverbesserungsmodus zu arbeiten, und mindestens ein benachbarter Netzwerkknoten (5b, 5c) die Fähigkeit hat, im Abdeckungsverbesserungsmodus arbeiten.

5. Netzwerkknoten (5a, 5b, 8) nach einem der Ansprüche 2-4, der dafür ausgelegt ist, zu entscheiden durch Empfangen des Energieerhöhungsschwellenwertes $Thr\_E_i$ von jeder jeweiligen drahtlosen Vorrichtung ($6_1$, ..., $6_i$, ..., $6_n$) oder Abrufen des Energieerhöhungsschwellenwerts $Thr\_E_i$ für jede drahtlose Vorrichtung ($6_1$, ..., $6_i$, ..., $6_n$) aus einem Speicher oder einer Datenbank, oder Bestimmen des Energieerhöhungsschwellenwertes $Thr\_E_i$ für jede drahtlose

Vorrichtung ($6_1$,..., $6_i$,..., $6_n$) basierend auf Informationen, die von jeder entsprechenden drahtlosen Vorrichtung ($6_1$,..., $6_i$,..., $6_n$) empfangen werden, oder Empfangen des Energieerhöhungsschwellenwertes Thr_$E_i$ von einem anderen Netzwerkknoten des drahtlosen Netzwerks (1) oder Bestimmen des Energieerhöhungsschwellwerts Thr_$E_i$ für jede drahtlose Vorrichtung ($6_1$,..., $6_i$,..., $6_n$) basierend auf Informationen, die von einem anderen Netzwerkknoten empfangen werden.

6. Netzwerkknoten (5a, 5b, 8) nach einem der Ansprüche 2-5, der dafür ausgelegt ist, einen jeweiligen zusätzlichen Energieverbrauch $E_i$ zu bestimmen, der von jeder drahtlosen Vorrichtung ($6_1$,..., $6_i$,..., $6_n$) benötigt wird, die von dem ersten Netzwerkknoten (5a) bedient wird, wenn sie stattdessen von einem benachbarten Netzwerkknoten bedient wird (5b, 5c), durch Empfangen von jeder drahtlosen Vorrichtung ($6_1$,..., $6_i$,..., $6_n$) eines entsprechenden zusätzlichen Energieverbrauchs $E_i$ oder durch Berechnen eines jeweiligen zusätzlichen Energieverbrauchs $E_i$, der von jeder drahtlosen Vorrichtung ($6_1$,..., $6_i$,..., $6_n$) benötigt wird, basierend auf Informationen, die von der jeweiligen drahtlosen Vorrichtung ($6_1$,..., $6_i$,..., $6_n$) empfangen werden.

7. Netzwerkknoten (5a, 5b, 8) nach einem der Ansprüche 2-6, der dafür ausgelegt ist, einen jeweiligen zusätzlichen Energieverbrauch $E_i$ zu bestimmen, der von jeder drahtlosen Vorrichtung ($6_1$,..., $6_i$,..., $6_n$) benötigt wird, die von dem ersten Netzwerkknoten (5a) bedient wird, wenn sie stattdessen von einem benachbarten Netzwerkknoten bedient wird (5b, 5c), durch:

   - Abschätzen für jede drahtlose Vorrichtung ($6_1$,..., $6_i$,..., $6_n$) einer Erhöhung der Anzahl von Wiederholungen N, die zum Senden und/oder Empfangen von Signalen zu/von einem benachbarten Netzwerkknoten (5b, 5c) erforderlich sind, verglichen mit der Anzahl von Wiederholungen, die für die Übertragung und/oder den Empfang von Signalen zu/von dem ersten Netzwerkknoten (5a) erforderlich sind, wobei das Schätzen auf der Signalstärke zwischen jedem benachbarten Netzwerkknoten (5b, 5c) und jeder jeweiligen drahtlosen Vorrichtung ($6_1$,..., $6_i$,..., $6_n$) basiert und
   - Bestimmen eines jeweiligen zusätzlichen Energieverbrauchs $E_i$, der von jeder drahtlosen Vorrichtung ($6_1$,..., $6_i$,..., $6_n$) benötigt wird, die von dem ersten Netzwerkknoten (5a) bedient wird, wenn sie stattdessen von einem benachbarten Netzwerkknoten (5b, 5c) basierend auf der jeweiligen Erhöhung der Anzahl von Wiederholungen bedient wird.

8. Netzwerkknoten (5a, 5b, 8) nach Anspruch 7, der dafür ausgelegt ist, eine Zunahme der Anzahl der Wiederholungen in zusätzlichen Energieverbrauch $E_i$ zu übersetzen, basierend auf einer Zeitdauer einer Signalübertragung oder eines Signalempfangs und einer entsprechenden Datenrate und basierend auf einer Aufwärtsstrecken- oder Abwärtsstrecken-Signalqualität.

9. Netzwerkknoten (5a, 5b, 8) nach einem der Ansprüche 2-8, der, wenn entschieden wird, den ersten Netzwerkknoten (5a) auszuschalten, für Folgendes ausgelegt ist:

   - Bestimmen für jede drahtlose Vorrichtung ($6_1$,..., $6_i$,..., $6_n$), die von dem ersten Netzwerkknoten (5a) bedient wird, basierend auf dem Vergleich, ob jede drahtlose Vorrichtung ($6_1$,..., $6_i$,..., $6_n$) in der Lage ist, eine Kanalschätzung mit einer verringerten Menge von Referenzsignalen durchzuführen, und
   - Anwenden einer verringerten Verwendung von Referenzsignalen in dem benachbarten Netzwerkknoten (5b, 5c), um die drahtlosen Vorrichtungen ($6_1$,..., $6_i$,..., $6_n$) beim Abschalten des ersten Netzwerkknotens (5a) zu versorgen, wenn das Bestimmen ergibt, dass die Anzahl von drahtlosen Vorrichtungen ($6_1$,..., $6_i$,..., $6_n$), die in der Lage sind, eine Kanalschätzung mit einer verringerten Menge von Referenzsignalen durchzuführen, höher als ein Schwellenwert ist.

10. Netzwerkknoten (5a, 5b, 8) nach einem der Ansprüche 2-9, der dafür ausgelegt ist, die Entscheidung zu treffen, wenn eines oder mehrere der folgenden auslösenden Kriterien erfüllt sind: eine Aktivitätsstufe des ersten Netzwerkknotens (5a) liegt unterhalb eines Aktivitätsschwellenwertes, eine Energiequelle, die den ersten Netzwerkknoten (5a) betreibt, liegt unterhalb eines Energieschwellenwertes eine Benutzeraktivität wird spärlich innerhalb des Versorgungsbereichs des ersten Netzwerkknotens (5a) verteilt.

11. Netzwerkknoten (5a, 5b, 8) nach einem der Ansprüche 2-10, der, wenn entschieden wird, den ersten Netzwerkknoten (5a) auszuschalten, dafür ausgelegt ist, die eine oder die mehreren drahtlosen Vorrichtungen ($6_1$,..., $6_i$,..., $6_n$) und alle anderen Kommunikationsvorrichtungen (7), die von dem ersten Netzwerkknoten (5a) bedient werden, über das Ausschalten informieren.

12. Netzwerkknoten (5a, 5b, 8) nach einem der Ansprüche 2-11, wobei der Energieanstiegsschwellenwert $Thr\_E_i$ eine zusätzliche Energieverbrauchserhöhung umfasst, die für die jeweilige drahtlose Vorrichtung ($6_1$,..., $6_i$,..., $6_n$) tolerierbar ist, während sie für eine bestimmte Zeit noch betriebsfähig ist.

13. Verfahren (90), das in einer drahtlosen Vorrichtung ($6_i$) eines drahtlosen Netzwerks (1) zur Unterstützung eines Netzwerkknotens (5a, 5b) bei der Entscheidung über das Ausschalten des Netzwerkknotens (5a, 5b) ausgeführt wird, wobei das drahtlose Netzwerk (1) einen ersten Netzwerkknoten (5a) umfasst, der zur drahtlosen Kommunikation mit der drahtlosen Vorrichtung ($6_i$) konfiguriert ist, wobei das Verfahren (90) Folgendes umfasst:

   - Erhalten (91) eines Energieerhöhungsschwellenwerts $Thr\_E_i$ für die drahtlose Vorrichtung ($6_i$), die von dem ersten Netzwerkknoten (5a) bedient wird,
   - Abschätzen (92) eines zusätzlichen Energieverbrauchs $E_i$, der von der drahtlosen Vorrichtung ($6_i$) benötigt wird, die von dem ersten Netzwerkknoten (5a) bedient wird, wenn sie stattdessen von einem benachbarten Netzwerkknoten (5b, 5c) bedient wird, und
   - Senden (93) einer Nachricht, die den zusätzlichen Energieverbrauch $E_i$ angibt, an den ersten Netzwerkknoten (5a) und/oder eines Vergleichs zwischen dem Energieerhöhungsschwellenwert $Thr\_E_i$ und dem zusätzlichen Energieverbrauch $E_i$.

14. Drahtlose Vorrichtung ($6_i$) eines drahtlosen Netzwerks (1) zur Unterstützung eines Netzwerkknotens (5a, 5b, 8) bei der Entscheidung über das Ausschalten eines Netzwerkknotens (5a, 5b), wobei das drahtlose Netzwerk (1) einen ersten Netzwerkknoten (5a) umfasst, der zur drahtlosen Kommunikation mit der drahtlosen Vorrichtung ($6_i$) konfiguriert ist, wobei die drahtlose Vorrichtung ($6_i$) Folgendes umfasst:

   einen Prozessor (100); und
   einen Speicher (101), der Anweisungen speichert, die, wenn sie von dem Prozessor ausgeführt werden, die drahtlose Vorrichtung ($6_i$) zu Folgendem veranlassen:

   - Ermitteln eines Energieerhöhungsschwellenwertes $Thr\_E_i$ für die drahtlose Vorrichtung ($6_i$), die von dem ersten Netzwerkknoten (5a) bedient wird,
   - Abschätzen eines zusätzlichen Energieverbrauchs $E_i$, der von der drahtlosen Vorrichtung ($6_i$) benötigt wird, die von dem ersten Netzwerkknoten (5a) bedient wird, wenn sie stattdessen von einem benachbarten Netzwerkknoten (5b, 5c) bedient wird, und
   - Senden einer Nachricht, die den zusätzlichen Energieverbrauch $E_i$ angibt, an den ersten Netzwerkknoten (5a) und/oder eines Vergleichs zwischen dem Energieerhöhungsschwellenwert $Thr\_E_i$ und dem zusätzlichen Energieverbrauch $E_i$.

15. Drahtlose Vorrichtung ($6_i$) nach Anspruch 14, die dafür ausgelegt ist, einen zusätzlichen Energieverbrauch $E_i$ abzuschätzen, der von der drahtlosen Vorrichtung benötigt wird ($6_i$), wenn die drahtlose Vorrichtung in einem Abdeckungsverbesserungsmodus mit einem oder mehreren benachbarten Netzwerkknoten (5b, 5c) arbeiten soll.

**Revendications**

1. Procédé (6o) mis en oeuvre dans un noeud de réseau (5a, 5b, 8) d'un réseau sans fil (1) pour décider de mettre hors tension un noeud de réseau (5a, 5b), le réseau sans fil (1) comprenant un premier noeud de réseau (5a) configuré en vue d'une communication sans fil avec un ou plusieurs dispositifs sans fil ($6_1$, ..., $6_i$, ..., $6_n$), le procédé (60) comprenant les étapes ci-dessous consistant à :

   - obtenir (61) un seuil d'augmentation d'énergie, « $Thr\_E_i$ », pour chaque dispositif sans fil ($6_1$, ..., $6_i$, ..., $6_n$) desservi par le premier noeud de réseau (5a) ;
   - déterminer (62) une consommation d'énergie supplémentaire respective « $E_i$ » qui serait requise par chaque dispositif sans fil ($6_1$, ..., $6_i$, ..., $6_n$) desservi par le premier noeud de réseau (5a) s'il était desservi à la place par un noeud de réseau voisin (5b, 5c) ;
   - comparer (63), pour chaque dispositif sans fil ($6_1$, ..., $6_i$, ..., $6_n$) desservi par le premier noeud de réseau (5a), le seuil d'augmentation d'énergie respectif, « $Thr\_E_i$ », à la consommation d'énergie supplémentaire respective « $E_i$ » ; et
   - décider (64), sur la base du résultat de la comparaison (63), s'il convient de mettre hors tension le premier noeud de réseau (5a), et dans l'affirmative :

- mettre hors tension le premier noeud de réseau (5a).

2. Noeud de réseau (5a, 5b, 8) d'un réseau sans fil (1) apte à décider de mettre hors tension un noeud de réseau (5a, 5b), le réseau sans fil (1) comprenant au moins un premier noeud de réseau (5a) configuré pour une communication sans fil avec un ou plusieurs dispositifs sans fil ($6_1$, ..., $6_i$, ..., $6_n$), le noeud de réseau (5a, 5b, 8) comprenant :

   un processeur (70) ; et
   une mémoire (71) stockant des instructions qui, lorsqu'elles sont exécutées par le processeur, amènent le noeud de réseau (5a, 5b, 8) à :

   - établir un seuil d'augmentation d'énergie, « $Thr\_E_i$ », pour chaque dispositif sans fil ($6_1$, ..., $6_i$, ..., $6_n$) desservi par le premier noeud de réseau (5a) ;
   - déterminer une consommation d'énergie supplémentaire respective « $E_i$ » qui serait requise par chaque dispositif sans fil ($6_1$, ..., $6_i$, ..., $6_n$) desservi par le premier noeud de réseau (5a) s'il était desservi à la place par un noeud de réseau voisin (5b, 5c) ;
   - comparer, pour chaque dispositif sans fil ($6_1$, ..., $6_i$, ..., $6_n$) desservi par le premier noeud de réseau (5a), le seuil d'augmentation d'énergie respectif, « $Thr\_E_i$ », à la consommation d'énergie supplémentaire respective « $E_i$ » ; et
   - décider, sur la base du résultat de la comparaison (63), s'il convient de mettre hors tension le premier noeud de réseau (5a) et, dans l'affirmative :
   - mettre hors tension le premier noeud de réseau (5a).

3. Noeud de réseau (5a, 5b, 8) selon la revendication 2, exploitable de manière à mettre en oeuvre l'étape de décision, en décidant de mettre hors tension le premier noeud de réseau (5a) lorsque l'étape de comparaison révèle que chaque consommation d'énergie supplémentaire « $E_i$ » est inférieure ou égale à chaque seuil d'augmentation d'énergie respectif « $Thr\_E_i$ ».

4. Noeud de réseau (5a, 5b, 8) selon la revendication 2 ou 3, exploitable de manière à mettre en oeuvre l'étape d'obtention, en établissant en outre, pour chaque dispositif sans fil ($6_1$, ..., $6_i$, ..., $6_n$) la capacité de celui-ci à fonctionner dans un mode d'amélioration de couverture, et en obtenant la capacité d'un ou plusieurs noeuds de réseau voisins (5b, 5c) à fonctionner dans un mode d'amélioration de couverture, et exploitable de manière à mettre en oeuvre l'étape de décision, en décidant en outre de mettre hors tension le premier noeud de réseau (5a) lorsque l'étape de comparaison (63) révèle que chaque consommation d'énergie supplémentaire « $E_i$ » est inférieure ou égale à chaque seuil d'augmentation d'énergie respectif « $Thr\_E_i$ » et lorsque l'étape d'établissement révèle que chaque dispositif sans fil ($6_1$, ..., $6_i$, ..., $6_n$) a la capacité de fonctionner dans un mode d'amélioration de couverture et qu'au moins un noeud de réseau voisin (5b, 5c) a la capacité de fonctionner dans le mode d'amélioration de couverture.

5. Noeud de réseau (5a, 5b, 8) selon l'une quelconque des revendications 2 à 4, exploitable de manière à mettre en oeuvre l'étape de décision, en recevant le seuil d'augmentation d'énergie, « $Thr\_E_i$ », en provenance de chaque dispositif sans fil respectif ($6_1$, ..., $6_i$, ..., $6_n$) ou en récupérant le seuil d'augmentation d'énergie, « $Thr\_E_i$ », pour chaque dispositif sans fil ($6_1$, ..., $6_i$, ..., $6_n$) à partir d'une mémoire ou d'une base de données, ou en déterminant le seuil d'augmentation d'énergie, « $Thr\_E_i$ », pour chaque dispositif sans fil ($6_1$, ..., $6_i$, ..., $6_n$) sur la base d'informations reçues en provenance de chaque dispositif sans fil respectif ($6_1$, ..., $6_i$, ..., $6_n$), ou en recevant le seuil d'augmentation d'énergie, « $Thr\_E_i$ », en provenance d'un autre noeud de réseau du réseau sans fil (1), ou en déterminant le seuil d'augmentation d'énergie, « $Thr\_E_i$ », pour chaque dispositif sans fil ($6_1$, ..., $6_i$, ..., $6_n$) sur la base d'informations reçues en provenance d'un autre noeud de réseau.

6. Noeud de réseau (5a, 5b, 8) selon l'une quelconque des revendications 2 à 5, exploitable de manière à déterminer une consommation d'énergie supplémentaire respective « $E_i$ » qui serait requise par chaque dispositif sans fil ($6_1$, ..., $6_i$, ..., $6_n$) desservi par le premier noeud de réseau (5a) s'il était à la place desservi par un noeud de réseau voisin (5b, 5c), en recevant, en provenance de chaque dispositif sans fil ($6_1$, ..., $6_i$, ..., $6_n$), une consommation d'énergie supplémentaire respective « $E_i$ », ou en calculant une consommation d'énergie supplémentaire respective « $E_i$ » requise par chaque dispositif sans fil ($6_1$, ..., $6_i$, ..., $6_n$), sur la base d'informations reçues en provenance de chaque dispositif sans fil respectif ($6_1$, ..., $6_i$, ..., $6_n$).

7. Noeud de réseau (5a, 5b, 8) selon l'une quelconque des revendications 2 à 6, exploitable de manière à déterminer une consommation d'énergie supplémentaire respective « $E_i$ » qui serait requise par chaque dispositif sans fil ($6_1$, ...,

$6_i$, ..., $6_n$) desservi par le premier noeud de réseau ($5a$) s'il était desservi à la place par un noeud de réseau voisin ($5b$, $5c$), en mettant en oeuvre les étapes ci-dessous consistant à :

- estimer, pour chaque dispositif sans fil ($6_1$, ..., $6_i$, ..., $6_n$), une augmentation du nombre de répétitions, « N », requises pour la transmission et/ou la réception de signaux à destination / en provenance d'un noeud de réseau voisin ($5b$, $5c$) par rapport au nombre de répétitions requises pour la transmission et/ou la réception de signaux à destination / en provenance du premier noeud de réseau ($5a$), l'estimation étant basée sur l'intensité de signal entre chaque noeud de réseau voisin ($5b$, $5c$) et chaque dispositif sans fil respectif ($6_1$, ..., $6_i$, ..., $6_n$) ; et
- déterminer une consommation d'énergie supplémentaire respective « $E_i$ » qui serait requise par chaque dispositif sans fil ($6_1$, ..., $6_i$, ..., $6_n$) desservi par le premier noeud de réseau ($5a$) s'il était à la place desservi par un noeud de réseau voisin ($5b$, $5c$) sur la base de l'augmentation respective du nombre de répétitions.

8. Noeud de réseau ($5a$, $5b$, $8$) selon la revendication 7, exploitable de manière à traduire une augmentation du nombre de répétitions en la consommation d'énergie supplémentaire « $E_i$ » sur la base d'une période de temps d'une transmission de signal ou d'une réception de signal et d'un débit de données correspondant, et sur la base d'une qualité de signal de liaison montante ou de liaison descendante.

9. Noeud de réseau ($5a$, $5b$, $8$) selon l'une quelconque des revendications 2 à 8, exploitable de manière à, lorsqu'il est décidé de mettre hors tension le premier noeud de réseau ($5a$) :

- déterminer pour chaque dispositif sans fil ($6_1$, ..., $6_i$, ..., $6_n$) desservi par le premier noeud de réseau ($5a$), sur la base de la comparaison, si chaque dispositif sans fil ($6_1$, ..., $6_i$, ..., $6_n$) est en mesure de mettre en oeuvre une estimation de canal avec une quantité réduite de signaux de référence ; et
- appliquer une utilisation réduite de signaux de référence dans le noeud de réseau voisin ($5b$, $5c$) pour desservir les dispositifs sans fil ($6_1$, ..., $6_i$, ..., $6_n$) suite à une mise hors tension du premier noeud de réseau ($5a$), si l'étape de détermination révèle que le nombre de dispositifs sans fil ($6_1$, ..., $6_i$, ..., $6_n$) qui sont en mesure de mettre en oeuvre une estimation de canal avec une quantité réduite de signaux de référence est supérieur à une valeur de seuil.

10. Noeud de réseau ($5a$, $5b$, $8$) selon l'une quelconque des revendications 2 à 9, exploitable de manière à initier la décision lorsqu'un ou plusieurs des critères de déclenchement suivants sont remplis, dans lesquels : un niveau d'activité du premier noeud de réseau ($5a$) est inférieur à un seuil d'activité, une source d'énergie alimentant le premier noeud de réseau ($5a$) est inférieure à un seuil d'énergie, l'activité d'utilisateur est faiblement répartie au sein de la zone de couverture du premier noeud de réseau ($5a$).

11. Noeud de réseau ($5a$, $5b$, $8$) selon l'une quelconque des revendications 2 à 10, exploitable de manière à, lors de la décision de mettre hors tension le premier noeud de réseau ($5a$), informer ledit un ou lesdits plusieurs dispositifs sans fil ($6_1$, ..., $6_i$, ..., $6_n$), et des quelconques autres dispositifs de communication ($7$) desservis par le premier noeud de réseau ($5a$), de la mise hors tension.

12. Noeud de réseau ($5a$, $5b$, $8$) selon l'une quelconque des revendications 2 à 11, dans lequel le seuil d'augmentation d'énergie, « $Thr\_E_i$ », comprend une augmentation de consommation d'énergie supplémentaire tolérable pour le dispositif sans fil respectif ($6_1$, ..., $6_i$, ..., $6_n$), tout en restant exploitable pendant une période de temps définie.

13. Procédé ($90$) mis en oeuvre dans un dispositif sans fil ($6_i$) d'un réseau sans fil ($1$) pour aider un noeud de réseau ($5a$, $5b$) à décider de mettre hors tension le noeud de réseau ($5a$, $5b$), dans lequel le réseau sans fil ($1$) comprend un premier noeud de réseau ($5a$) configuré en vue d'une communication sans fil avec le dispositif sans fil ($6_i$), le procédé ($90$) comprenant les étapes ci-dessous consistant à :

- obtenir ($91$) un seuil d'augmentation d'énergie, « $Thr\_E_i$ », pour le dispositif sans fil ($6i$) desservi par le premier noeud de réseau ($5a$) ;
- estimer ($92$) une consommation d'énergie supplémentaire « $E_i$ » qui serait requise par le dispositif sans fil ($6i$) desservi par le premier noeud de réseau ($5a$) s'il était desservi par un noeud de réseau voisin ($5b$, $5c$) ; et
- transmettre ($93$) au premier noeud de réseau ($5a$) un message indiquant la consommation d'énergie supplémentaire « $E_i$ » et/ou une comparaison entre le seuil d'augmentation d'énergie, « $Thr\_E_i$ », et la consommation d'énergie supplémentaire « $E_i$ ».

14. Dispositif sans fil ($6_i$) d'un réseau sans fil ($1$) pour aider un noeud de réseau ($5a$, $5b$, $8$) à décider de mettre hors tension un noeud de réseau (5a, 5b), dans lequel le réseau sans fil (1) comprend un premier noeud de réseau (5a) configuré en vue d'une communication sans fil avec le dispositif sans fil ($6_i$), le dispositif sans fil ($6_i$) comprenant :

un processeur (100) ; et
une mémoire (101) stockant des instructions qui, lorsqu'elles sont exécutées par le processeur, amènent le dispositif sans fil ($6_i$) à :

- établir un seuil d'augmentation d'énergie, « Thr_$E_i$ », pour le dispositif sans fil ($6_i$) desservi par le premier noeud de réseau (5a) ;
- estimer une consommation d'énergie supplémentaire « $E_i$ » qui serait requise par le dispositif sans fil ($6_i$) desservi par le premier noeud de réseau (5a) s'il était desservi par un noeud de réseau voisin (5b, 5c) ; et
- transmettre au premier noeud de réseau (5a) un message indiquant la consommation d'énergie supplémentaire « $E_i$ » et/ou une comparaison entre le seuil d'augmentation d'énergie, « Thr_$E_i$ », et la consommation d'énergie supplémentaire « $E_i$ ».

15. Dispositif sans fil ($6_i$) selon la revendication 14, exploitable de manière à estimer une consommation d'énergie supplémentaire « $E_i$ » qui serait requise par le dispositif sans fil ($6_i$) si le dispositif sans fil devait fonctionner dans un mode d'amélioration de couverture avec un ou plusieurs noeuds de réseau voisins (5b, 5c).

Fig. 1

30

| Initial decision to switch off | 31 |

↓

| For every WD in cell, get measurements from j cells | 32 |

↓

| Establish threshold Thr($E_i$) for additional energy consumption tolerable due to cell switch for each WD in cell | 33 |

↓

| Estimate additional energy consumption $E_i$ for WDs in cell | 34 |

↓

Estimated additional energy consumption $E_i$ below threshold $Thr_i(E_i)$ for all WDs? — 35 — Yes →

| Inform WDs in cell and switch off | 36 |

↓ (No)

| Do not switch off | 37 |

↓

| End | 38 |

Fig. 2

40

```
Initial decision to switch off          41
              │
              ▼
   For every WD in cell, get            42
   measurements from j cells
              │
              ▼
Establish threshold $Thr_i(E_i)$ for    43
      additional energy
  consumption tolerable due to
 cell switch for each WD in cell
              │
              ▼
  Establish capability of J-1           44
 neighbor network nodes and
 for WD in cell for operating in
  coverage enhancement mode
              │
              ▼
```

No ◄─── Estimated additional          45
        energy consumption $E_i$
        for WDs in cell below
        threshold $Thr_i(E_i)$?

                Yes
                 │
                 ▼

      At least one neighbor            46      Yes
      network node capable of    ────────────────►
      coverage enhancement                      Inform WDs in    47
      mode?                                     cell and switch
                                                     off
                No
                 │
                 ▼
          Do not switch off             48
                 │
                 ▼
               End                      49

Fig. 3

50

```
┌─────────────────────────────┐
│  Initial decision to switch off │        51
└─────────────────────────────┘
              │
              ▼
┌─────────────────────────────┐
│  For every WD in cell, get   │        52
│   measurements from j cells  │
└─────────────────────────────┘
              │
              ▼
┌─────────────────────────────┐
│  Receive, from every WD in   │        53
│  cell capability for operating in │
│  coverage enhancement mode   │
└─────────────────────────────┘
              │
              ▼
┌─────────────────────────────┐
│  Establish capability of J-1 │        54
│  neighbor network nodes for  │
│   operating in coverage      │
│    enhancement mode          │
└─────────────────────────────┘
              │
              ▼
```

55

At least one neighbor network node capable of coverage enhancement mode?

Yes

56

Inform WDs in cell and switch off

No

Do not switch off                57

End                              58

Fig. 4

200

Start Counter C=0 — 201

For every wireless device i (in need of coverage enhancement): get RSRP from j cells (serving & j-1 strongest) — 202

Estimate number of repetitions, N, required for transmission/reception for j cells — 203

Estimate additional energy consumption, $E_i$, when switching from serving cell to neighbor cell — 204

Estimate additional energy consumption, $E_i$ > Thr_$E_i$? — 205

Yes

No

i=i+1 — 206a

C=C+1 — 206b

Total number of wireless devices in cell, T, + 1 reached? — 207

No

Yes

Switch-off & inform users in cell — 209a

No

C>Threshold_C? — 208

Yes

Do not switch-off — 209b

End — 210

Fig. 5

Information element  #

| 0 | 1 | 2 | 3 |
|---|---|---|---|
| 0.001 | 9 | 4 | 6 |

Threshold_E [J]

Pon [dBm]

Prx [dBm]

Ptx [dBm]

Fig. 6

300

301 — Start Counter D=0

302 — For every wireless device i (in need of coverage enhancement) obtain measurements from j cells (serving & j-1 strongest) & energy consumption related parameters

303 — Channel estimation possible with reduced amount of pilots?

Yes

No

304 — Estimate additional energy consumption, $E_i$, when switching from serving cell to neighbor cell

305 — Estimate additional energy consumption, $E_i$ > Thr_$E_i$ ?

Yes

306b — D=D+1

No

306a — i=i+1

307 — Total number of wireless devices in cell, T, + 1 reached?

No

Yes

309a — Apply "small cell enhancement mode" & inform users in cell

No

308 — D>Threshold_D?

Yes

309b — Do not apply "small cell enhancement mode"

310 — End

Fig. 7

60

```
Obtain energy increase threshold          61
for each wireless device served by
1st network node

            ↓

Determine a respective additional         62
energy consumption required by
each wireless device if instead
served by another network node

            ↓

Compare, for each wireless                63
device, the respective energy
increase threshold with the
respective additional energy
consumption

            ↓

Decide, based on comparison,              64
whether to switch off the 1st
network node
```

Fig. 8

```
┌─────────────────────────────────────────────┐
│  ┌──────────────┐         ┌──────────┐       │      74
│  │  Processor   │         │   I/O    │        │
70 │  └──────────────┘         └──────────┘       │      5a,5b,8
│                                               │
│  ┌──────────────┐         ┌──────────┐       │
71 │  │   Memory     │         │  Memory  │       │      73
72 │  │  ┌────┐      │         └──────────┘       │
│  │  │    │      │         ┌ ─ ─ ─ ─ ┐        │      75
│  │  └────┘      │         │  Rx/Tx   │        │
│  └──────────────┘         └ ─ ─ ─ ─ ┘        │
└─────────────────────────────────────────────┘
```

Fig. 9

80 — Means for obtaining energy increase threshold for each wireless device served by 1st network node

5a,5b,8

81 — Means for determining a respective additional energy consumption required by each wireless device if instead served by another network node

82 — Means for comparing, for each wireless device, the respective energy increase threshold with the respective additional energy consumption

83 — Means for deciding, based on comparison, whether to switch off the 1st network node

84 — Additional means

Fig. 10

90

Obtain an energy increase threshold — 91

Estimate additional energy consumption required if served by a neighboring network node — 92

Transmit to serving network node a message indicating the additional energy consumption and/or comparison between the energy increase threshold and the additional energy consumption — 93

Fig. 11

100

Processor

Rx/Tx 103

6ᵢ

101

Memory

102

Sensing device 104

Fig. 12

6ᵢ

110

Means for obtaining an energy increase threshold

111

Means for estimating additional energy consumption required if served by a neighboring network node

112

Means for transmitting to serving network node a message indicating the additional energy consumption and/or comparison between the energy increase threshold and the additional energy consumption

113

Fig. 13

**EP 3 143 803 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130157642 A1